# EUROPEAN PATENT APPLICATION

(11) **EP 4 708 223 A1**
(43) Date of publication of application: **11.03.2026**
(21) Application number: 25191250.7
(22) Date of filing: 23.07.2025
(51) Int. Cl.: G06V 10/94, G06F 3/04815, G06F 3/0482, G06F 16/3329, G06F 16/9032, G06F 30/13, G06N 3/045, G06T 19/00, G06V 10/778, G06V 10/70, G06V 20/20, H04L 67/00

(54) **INFORMATION PROCESSING SYSTEM, IMAGE MANAGEMENT SERVER, AND CARRIER MEDIUM**

(30) Priority: 09.09.2024 JP 2024154762; 22.01.2025 JP 2025009141
(71) Applicant: Ricoh Company, Ltd., Tokyo 143-8555 (JP)
(72) Inventor: MOTOHASHI, Naoki, Tokyo, 143-8555 (JP); SUZUKI, Yuuki, Tokyo, 143-8555 (JP)
(74) Representative: SSM Sandmair

(57) **Abstract**

An information processing system (100) includes an image management server (40) and a terminal device (10). The image management server (40) manages image information of an item. The terminal device (10) communicates with the image management server (40). The image management server (40) includes a memory (4000) and a text information generation unit (45). The memory (4000) stores a first model (4004A) and a second model (4004B). The first model (4004A) is trained on a correspondence between the image information of the item and information on the item, or a correspondence among the image information of the item, the information on the item, and input information input into the terminal device (10). The second model (4004B) is trained on a correspondence between the image information of the item and the input information input into the terminal device (10). The text information generation unit (45) generates text information on the item based on the image information of the item selected via the terminal device (10), the information on the item, and the first model (4004A), or on the image information of the item selected via the terminal device (10) and the second model (4004B). The terminal device (10) includes a display control unit (13) that causes a display screen including the text information to be displayed.

## Description

### BACKGROUND

### Technical Field

The present disclosure relates to an information processing system, an image management server, and a carrier medium.

### Related Art

A generative artificial intelligence (AI) system is capable of generating textual information from various types of content, such as text, images, and audio. While typical AI systems have merely presented the most appropriate responses from among pre-trained data, generative AI systems are capable of continued self-learning, including the acquisition of information and data not explicitly provided by human input, and are capable of outputting original content that has not been previously input.

Techniques have been developed to improve the quality of leaning data in machine learning (for example, see Japanese Patent No. 6839123). Japanese Patent No. 6839123 discloses a technique in which a learning model receives failure information from a user as an input, outputs a failure recovery procedure, and sets a weight of evaluation regarding the usefulness of the failure recovery procedure that the learning model uses for relearning on the basis of skill information indicating the skill of the user in failure recovery.

### SUMMARY

The present disclosure described herein provides an information processing system including an image management server and a terminal device. The image management server manages image information of an item. The terminal device communicates with the image management server. The image management server includes a memory and a text information generation unit. The memory stores a first model and a second model. The first model is trained on a correspondence between the image information of the item and information on the item, or a correspondence among the image information of the item, the information on the item, and input information input into the terminal device. The second model is trained on a correspondence between the image information of the item and the input information input into the terminal device. The text information generation unit generates text information on the item based on the image information of the item selected via the terminal device, the information on the item, and the first model, or on the image information of the item selected via the terminal device and the second model. The terminal device includes a display control unit that causes a display screen including the text information to be displayed.

The present disclosure described herein provides an image management server including a memory, a text information generation unit, and a transmission unit. The memory stores a first model and a second model. The first model is trained on a correspondence between image information of an item and information on the item, or a correspondence among the image information of the item, the information on the item, and input information input into a terminal device that communicates with the image management server. The second model is trained on a correspondence between the image information of the item and the input information input into the terminal device. The text information generation unit generates text information on the item based on the image information of the item selected via the terminal device, the information on the item, and the first model, or on the image information of the item selected via the terminal device and the second model.

The transmission unit transmits a display screen including the text information to the terminal device to cause the display screen to be displayed on the terminal device.

The present disclosure described herein provides a carrier medium carrying computer-readable code for controlling a computer system to carry out a method. The method includes generating and transmitting. The generating includes generating text information on an item based on image information of the item selected via a terminal device, information on the item, and a first model trained on a correspondence between the image information of the item and the information on the item, or a correspondence between the image information of the item, the information on the item, and input information input into the terminal device, or on the image information of the item selected via the terminal device and a second model trained on a correspondence between the image information of the item and the input information input into the terminal device. The transmitting includes transmitting a display screen including the text information to the terminal device to cause the display screen to be displayed on the terminal device.

According to one aspect of the present disclosure, text information can be generated with an appropriate model.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overall configuration of an information processing system;
FIG. 2 is a block diagram illustrating a hardware configuration of an image management server, a property information management server, or a terminal device;
FIG. 3 is a block diagram illustrating a functional configuration of an image management server, a property information management server, and a terminal device in an information processing system;
FIG. 4 is a conceptual diagram illustrating an image information management table;
FIG. 5 is a conceptual diagram illustrating a property management information management table;
FIGS. 6A and 6B are diagrams illustrating display screens on a terminal device in a model update process and a text information generation process, respectively;
FIGS. 7A and 7B are other diagrams illustrating display screens on a terminal device in a model update process and a text information generation process, respectively;
FIG. 8 is a sequence diagram illustrating a model update process;
FIGS. 9A and 9B are flowcharts, each illustrating a process in which a determination unit determines whether to update a first tacit knowledge model or to update a second tacit knowledge model;
FIG. 10 is a diagram illustrating a property management screen;
FIG. 11 is a diagram illustrating a property management screen;
FIG. 12 is a diagram illustrating a property display screen;
FIG. 13 is a diagram illustrating a message displayed in a pop-up window on a property display screen;
FIG. 14 is a sequence diagram illustrating a text information generation process using a first tacit knowledge model;
FIG. 15 is a diagram illustrating a property display screen in an inference phase;
FIG. 16 is a diagram illustrating a message displayed in a pop-up window on a property display screen;
FIG. 17 is a diagram illustrating text information displayed on a text display screen;
FIG. 18 is a sequence diagram illustrating a process in which an image management server communicates with a property information management server to update a model;
FIG. 19 is a sequence diagram illustrating a model update process;
FIG. 20 is a sequence diagram illustrating a text information generation process using a second tacit knowledge model;
FIG. 21 is a diagram illustrating a text display screen including text information generated based on a second tacit knowledge model;
FIG. 22 is a sequence diagram illustrating a model update process;
FIG. 23 is a flowchart of a process in which a determination unit determines whether to update a first tacit knowledge model or to update a second tacit knowledge model;
FIG. 24 is a diagram illustrating a property display screen;
FIG. 25 is a sequence diagram illustrating a text information generation process using a second tacit knowledge model when a terminal device directly logs in to an image management server;
FIG. 26 is a diagram illustrating a property display screen when a terminal device directly logs in to an image management server;
FIG. 27 is a diagram illustrating a text display screen;
FIG. 28 is a diagram illustrating an overall configuration of an information processing system;
FIG. 29 is a block diagram illustrating a functional configuration of an image management server, a property information management server, and a terminal device in an information processing system;
FIGS. 30A and 30B (FIG. 30) is a sequence diagram illustrating a process of generating text information and image information; and
FIG. 31 is a diagram illustrating generated image information displayed on a text display screen.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below.

As used herein, the singular forms "a," "an," and "the" are intended to include the plural forms as well, unless the context clearly indicates otherwise. The term "connected/coupled" includes both direct connections and connections in which there are one or more intermediate connecting elements.

For the sake of simplicity, identical or similar reference numerals denote identical or similar elements such as parts and materials having the same functions, and redundant descriptions thereof are omitted unless otherwise required.

An information processing system and an information processing method performed by the information processing system are described below with reference to the drawings.

### Supplemental Description of Tacit Knowledge

In industries such as civil engineering and construction, the implementation of building information modeling (BIM) / construction information modeling (CIM) has been promoted to address challenges such as a declining birthrate and aging population, as well as enhancing labor productivity.

BIM refers to a solution that utilizes a database of buildings, in which a three-dimensional digital model generated on a computer is supplemented with attribute data, such as cost, finishes, and management information. This solution enables the effective use of information throughout all phases of a building's lifecycle, including design, construction, and subsequent maintenance and management. The three-dimensional digital model may be referred to as a 3D model in the following description.

CIM refers to a solution proposed for the civil engineering field-including infrastructure such as roads, electricity, gas, and water supply-modeled after BIM, which had been advancing in the architectural field. Similar to BIM, CIM is implemented to enhance and streamline the entire construction production system by information sharing among stakeholders through the use of 3D models as a central platform.

In promoting BIM and CIM, how to utilize the constructed BIM and CIM is important.

In particular, the 3D models reconstructed through BIM and CIM can be utilized not only for design and construction purposes, but also for other tasks such as maintenance and management operations and site surveys. In other words, the 3D models are not limited to use as design drawings; the 3D models can also be utilized for alternative purposes such as recording information within the model and sharing data with other stakeholders.

Since operations performed on the 3D model can be recorded as logs, tacit knowledge extracted from these records may be effectively utilized for purposes such as transferring skills and expertise from experienced personnel to younger or less experienced workers. This is expected to contribute to, for example, front-loading of operations and the development of human resources.

Focusing on the transfer of tacit knowledge, it becomes a challenge not only in the context of 3D models but also when using 2D data, such as omnidirectional images or planar images, to effectively convey such knowledge across different tasks and between users with varying levels of expertise.

Specifically, since tacit knowledge is qualitative in nature and difficult to quantify, even if a tacit knowledge model is generated from tacit knowledge, it is challenging to ensure user trust in the model. As a result, promoting the use of such tacit knowledge models has been difficult. For example, if the domain of expertise of the tacit knowledge model differs from the domain of expertise of the user, then no matter how sophisticated the model may be, the tacit knowledge model holds little to no value for the user. Similarly, if the knowledge level of the tacit knowledge model is lower than the knowledge level of the user, the tacit knowledge model holds little to no value for the user.

However, it is also true that tacit knowledge models can provide users with new perspectives and insights. By utilizing such models, even users with limited experience have the potential to acquire operational expertise and technical capabilities and to apply the acquired operational expertise and technical capabilities effectively in their tasks.

**In** some cases, a first server and a second server may respectively manage associated information. For example, the first server holds property management information, and the second server manages three-dimensional image information of a property. Assuming that the second server generates a tacit knowledge model, a first tacit knowledge model that uses the inspection information of an item may be generated, or a second tacit knowledge model that does not use the inspection information of the item may be generated. The first tacit knowledge model is an example of a first model, whereas the second tacit knowledge model is an example of a second model. **In** this case, for example, the first tacit knowledge model is used when text information specialized for expert knowledge and a specific item is desired to be generated, whereas the second tacit knowledge model can be used when general-purpose text information applicable to expert knowledge and items of the same type is desired to be generated. When the user can designate which of the tacit knowledge models is to be used, the user can select tacit knowledge specialized for a specific item or tacit knowledge applicable to items of the same type.

A description is given below of a system that allows a user to selectively use a first tacit knowledge model that uses property management information and a second tacit knowledge model that does not use the property management information. The property management information includes, but is not limited to, inspection information of an item.

### Terms

The term "user" refers to a person who uses text information or non-text content, such as images, generated or output by a tacit knowledge model. The term "data provider" refers to a person who provides data to be used by the tacit knowledge model for learning, such as audio information, text information, operation information, images, and 3D data.

The term "tacit knowledge" refers to knowledge based on, for example, personal experience and intuition. The term "tacit knowledge model" refers to a model that learns tacit knowledge and outputs responses to questions based on the learned tacit knowledge. The term "model" refers to a mechanism or artificial intelligence (AI) that learns the correspondence between input data and output data, and outputs data in response to the input data. The output data may or may not include teacher data.

The term "property" refers to any space in which an item can be placed, such as a facility or a room in a facility. The term "item" refers to an item that is placed in a property. The type of item to be placed varies depending on the function of the facility.

Examples of such properties include, but are not limited to, real estate, industrial plants, construction sites, research institutions, healthcare facilities, agricultural land, storage facilities, and other infrastructure requiring maintenance and management. Examples of such items include, but are not limited to, furniture, construction materials, equipment, heavy machinery, tools, instruments, raw materials, biological cultures, and food products.

The term "item-related information" is information on an item and includes, but is not limited to, the name of the item and the name of the property in which the item is placed. The item-related information can preferably be tacit knowledge. For example, information known only to a certain user is given as the item-related information. The item-related information is described below using the term "inspection information." The item-related information may further include documentation such as an instruction manual of the item, a daily report of work performed on the item, an estimate of the item, or design drawings associated with the item. The term "inspection" may encompass various activities such as investigation, testing, verification, auditing, and checking procedures.

The term "three-dimensional image information of an item" is an image of an item displayed on a display. The three-dimensional image information of an item represents a planar image as a projection of the three-dimensional model shape of an item onto a two-dimensional plane, allowing the user to change the viewpoint. The three-dimensional image information of an item may be an omnidirectional image.

### First Embodiment

### System Configuration

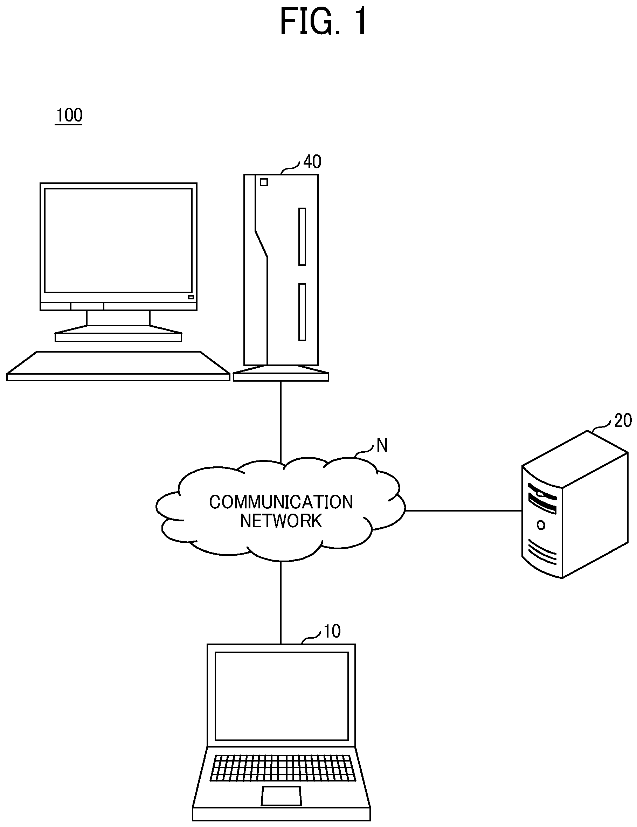

FIG. 1 is a diagram illustrating an overall configuration of an information processing system 100. The information processing system 100 includes a terminal device 10, which is an example of an input and output device, an image management server 40, and a property information management server 20. Alternatively, the information processing system 100 may not include the terminal device 10 provided that the terminal device 10 is connected to the image management server 40 or the property information management server 20 when needed.

The image management server 40, which is an example of a second server, is one or more information processing apparatuses capable of communicating with the terminal device 10 via a communication network N. The image management server 40 manages three-dimensional image information of a property and has a tacit knowledge model and a large-scale language model. The image management server 40 uses these to return text information including tacit knowledge to the user. The image management server 40 may be a web server that returns a processing result to the terminal device 10 in response to a request from the terminal device 10. The term "server" refers to a computer or software that performs the function of providing information or a processing result in response to a request from a client.

The image management server 40 may support cloud computing. The term "cloud computing" refers to internet-based computing where resources on a network are used or accessed without identifying specific hardware resources. Cloud computing may take any form, including Software as a Service (SaaS), Platform as a Service (PaaS), or Infrastructure as a Service (IaaS). For this reason, the image management server 40 does not need to be housed in a single housing or provided as a single apparatus. The functions of the image management server 40 may be allocated among multiple information processing apparatuses. Alternatively, each of the multiple information processing apparatuses may have all the functions, with processing being switched among the information processing apparatuses based on load balancing or similar mechanisms.

Instead of the image management server 40 having the tacit knowledge model and the large-scale language model, the image management server 40 may call an application programming interface (API) published by an external system and use at least one of the tacit knowledge model and the large-scale language model.

The property information management server 20, which is an example of a first server, is one or more information processing apparatuses capable of communicating with the terminal device 10 via the communication network N. The property information management server 20 manages property management information. The property management information is string data presented as a text string, such as text information. The property information management server 20 may or may not have image information. In a case where the property information management server 20 has image information, the image information is merely, for example, a photograph different from an image managed by the image management server 40. The property information management server 20 is a server for a user to update property management information as appropriate and manage the progress of the construction of a property and the arrangement of items.

The property information management server 20 may be a web server that returns a processing result to the terminal device 10 in response to a request from the terminal device 10. The property information management server 20 is capable of communicating with the image management server 40 via the communication network N. The property information management server 20 may support either cloud computing or on-premises environments.

Preferably, the image management server 40 and the property information management server 20 are interoperably linked such that single sign-on can be performed across both servers. The image management server 40 is capable of communicating with the property information management server 20 via an API published by the property information management server 20. Alternatively, the image management server 40 and the property information management server 20 may be in a business partnership.

The terminal device 10 is a general-purpose information processing terminal used by a user of the information processing system 100. On the terminal device 10, a web browser and a native application dedicated to the image management server 40 or the property information management server 20 operate. In a case where the terminal device 10 executes a web browser, the terminal device 10 and the image management server 40 or the property information management server 20 execute a web application. Specifically, the web application is an application that operates through the cooperation of a program written in a programming language (e.g., JAVASCRIPT) running on a web browser and a program running on a web server (e.g., the image management server 40). When the web application is executed, processing may be performed by the image management server 40 or the property information management server 20, or by the terminal device 10 that has received the web application.

An application that is not executed unless installed in the terminal device 10 is referred to as a native application. The application executed by the terminal device 10 may be a web application or a native application. In this case, processing may be performed by the image management server 40 or the terminal device 10 that executes the native application.

The terminal device 10 is, for example, a personal computer (PC), a smartphone, a personal digital assistant (PDA), or a tablet terminal. The terminal device 10 may be any other device on which a web browser or a native application operates. The terminal device 10 may be an electronic blackboard, a television receiver, a glass device, or a wearable device. Multiple terminal devices 10 may be present.

The terminal device 10 is capable of communicating with the image management server 40 and the property information management server 20 via the communication network N. The communication network N is implemented by, for example, the Internet, a local area network (LAN), or a provider service.

The communication network N may include not only wired communication but also mobile communication networks in compliance with, for example, 3rd Generation Mobile Communication System (3G), Worldwide Interoperability for Microwave Access (WiMAX), or Long-Term Evolution (LTE), and networks using wireless LANs. The terminal device 10 can establish communication by a short-range communication technology such as BLUETOOTH or near field communication (NFC).

In FIG. 1, the image management server 40, the property information management server 20, and the terminal device 10 communicate with one another via the communication network N. Alternatively, the user may directly operate the image management server 40 or the property information management server 20 from a console, or the terminal device 10 may have the functions of the image management server 40 or the property information management server 20. In other words, the terminal device 10 may provide the functions of the information processing system 100 in a standalone manner, without relying on external systems.

### Hardware Configuration

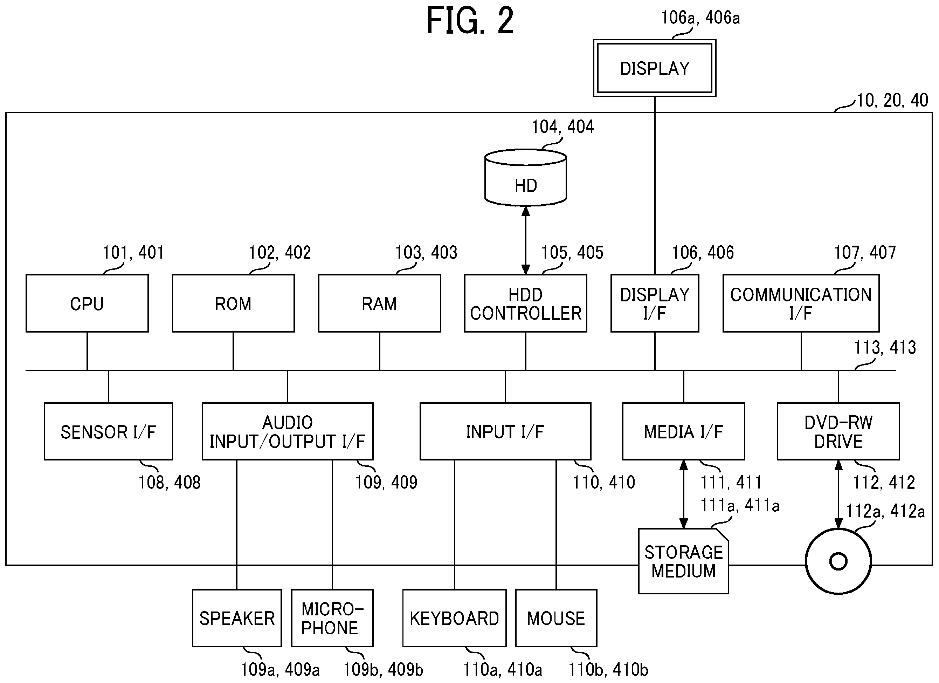

FIG. 2 is a block diagram illustrating a hardware configuration of the image management server 40, the property information management server 20, or the terminal device 10. Each hardware component of the image management server 40 or the property information management server 20 is denoted by a reference numeral in the 400s. Each hardware component of the terminal device 10 is denoted by a reference numeral in the 100s.

The hardware configuration of the terminal device 10 is described below.

Since the hardware configuration of the image management server 40 or the property information management server 20 is the same as that of the terminal device 10, the description thereof will be omitted.

The terminal device 10 is implemented by a computer. As illustrated in FIG. 2, the terminal device 10 includes a central processing unit (CPU) 101, a read-only memory (ROM) 102, a random-access memory (RAM) 103, a hard disk (HD) 104, a hard disk drive (HDD) controller 105, a display interface (I/F) 106, and a communication I/F 107.

The CPU 101 controls the overall operation of the terminal device 10. The ROM 102 stores programs used to drive the CPU 101, such as an initial program loader (IPL). The RAM 103 is used as a work area for the CPU 101.

The HD 104 stores various data, such as programs. The HDD controller 105 controls the reading or writing of various data to or from the HD 104 under the control of the CPU 101.

The display I/F 106 is a circuit that causes images to be displayed on a display 106a.

The display 106a is an example of a display unit, such as a liquid crystal display or an organic electroluminescence (EL) display that displays various types of information, such as the cursor, menus, windows, text, or images. The communication I/F 107 is an interface used for communication with other devices (external devices).

When the terminal device 10 is a glass device, the terminal device 10 may use a circuit that causes images to be displayed on a transmissive and reflective member, such as a lens, in place of the display I/F 106.

The communication I/F 107 is, for example, a network interface card (NIC) in compliance with transmission control protocol/internet protocol (TCP/IP).

The terminal device 10 further includes a sensor I/F 108, an audio input/output I/F 109, an input I/F 110, a media I/F 111, a digital versatile disk rewritable (DVD-RW) drive 112, and a graphics processing unit (GPU).

The sensor I/F 108 is an interface that receives information detected by various sensors. The audio input/output I/F 109 is a circuit that processes the input of audio signals from a microphone 109b and the output of audio signals to a speaker 109a under the control of the CPU 101. The input I/F 110 is an interface for connecting an input device to the terminal device 10.

A keyboard 110a is a type of input device equipped with multiple keys used for entering, for example, characters, numbers, and various commands. A mouse 110b is a type of input device that enables, for example, the selection and execution of various commands, the selection of processing targets, the movement of the cursor, or operations on a display screen.

The media I/F 111 controls the reading or writing (storage) of data to or from a recording medium 111a, such as flash memory. The DVD-RW drive 112 controls the reading or writing of various data to or from a DVD-RW 112a, which is an example of a removable recording medium. The removable recording medium is not limited to the DVD-RW. For example, the removable recording medium may be a DVD-recordable (DVD-R). Further, the DVD-RW drive 112 may be a BLU-RAY drive to control the reading or writing of various data to or from a BLU-RAY disc. The GPU is an image processing processor used to render images and other visual data onto a screen.

The terminal device 10 further includes a bus line 113. Examples of the bus line 113 include, but are not limited to, an address bus and a data bus. The bus line 113 electrically connects the components, such as the CPU 101, with one another.

Recording media, such as HDs or compact disc read-only memories (CD-ROMs) on which the above-mentioned programs are stored, may be provided as program products, either domestically or internationally. The terminal device 10 implements an information processing method by, for example, executing a program.

### Functions

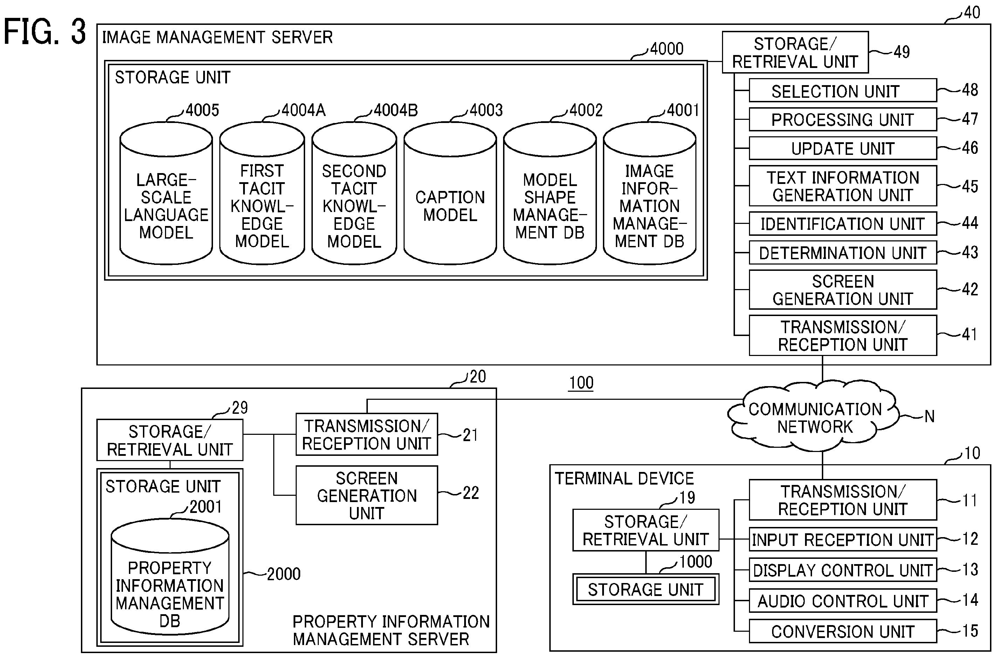

FIG. 3 is a block diagram illustrating a functional configuration of the image management server 40, the property information management server 20, and the terminal device 10 in the information processing system 100.

### Terminal Device

As illustrated in FIG. 3, the terminal device 10 includes a transmission/reception unit 11, an input reception unit 12, a display control unit 13, an audio control unit 14, a conversion unit 15, and a storage/retrieval unit 19. These functional units are functions or means of functioning that are implemented by the operation of one or more hardware components illustrated in FIG. 2 in response to instructions from the CPU 101, based on a program deployed from the HD 104 to the RAM 103. The terminal device 10 further includes a storage unit 1000, which is implemented by at least one of the RAM 103 and the HD 104 illustrated in FIG. 2.

The transmission/reception unit 11, which is an example of a transmission unit, is implemented by instructions from the CPU 101 illustrated in FIG. 2 and the communication I/F 107 illustrated in FIG. 2. The transmission/reception unit 11 transmits and receives various data (or information) to and from another terminal, device, apparatus, or system via the communication network N.

The input reception unit 12, which is an example of an input reception unit, is implemented by instructions from the CPU 101 illustrated in FIG. 2, as well as by the input I/F 110 and the audio input/output I/F 109 illustrated in FIG. 2. The input reception unit 12 receives various inputs from the user via the microphone 109b, the keyboard 110a, or the mouse 110b illustrated in FIG. 2.

The display control unit 13, which is an example of a display control unit and an output unit, is implemented by instructions from the CPU 101 illustrated in FIG. 2 and the display I/F 106 illustrated in FIG. 2. The display control unit 13 causes various images and screens to be displayed on the display 106a, which is an example of a display unit. When the terminal device 10 is a glass device, the display control unit 13 causes virtual images to be displayed on a transmissive and reflective member, such as a lens, in place of the display I/F 106.

The audio control unit 14, which is an example of an audio control unit and an output unit, is implemented by instructions from the CPU 101 illustrated in FIG. 2 and the audio input/output I/F 109 illustrated in FIG. 2. The audio control unit 14 causes sound to be reproduced through the speaker 109a, which is an example of an audio reproduction unit.

The conversion unit 15, which is an example of a processing unit, is implemented by instructions from the CPU 101 illustrated in FIG. 2. The conversion unit 15 performs processing for converting text information into audio information, and processing for converting audio information into text information.

The storage/retrieval unit 19, which is an example of a memory control unit, is implemented by instructions from the CPU 101 illustrated in FIG. 2, as well as by the HD 104, the media I/F 111, and the DVD-RW drive 112 illustrated in FIG. 2. The storage/retrieval unit 19 performs processing to store various data in, or retrieve various data from, the storage unit 1000, the recording medium 111a, and the DVD-RW 112a.

### Functional Configuration of Image Management Server

The image management server 40 includes a transmission/reception unit 41, a screen generation unit 42, a determination unit 43, an identification unit 44, a text information generation unit 45, an update unit 46, a processing unit 47, a selection unit 48, and a storage/retrieval unit 49. These functional units are functions or means of functioning that are implemented by the operation of one or more hardware components illustrated in FIG. 2 in response to instructions from a CPU 401, based on a program deployed from an HD 404 to a RAM 403. The image management server 40 further includes a storage unit 4000, which is implemented by the HD 404 in FIG. 2. The storage unit 4000 is an example of a storage unit.

In FIG. 3, all the functions are implemented on the single image management server 40. Alternatively, the image management server 40 may be configured such that the functions are distributed across multiple computers.

The transmission/reception unit 41, which is an example of a transmission unit, is implemented by instructions from the CPU 401 illustrated in FIG. 2 and a communication I/F 407 illustrated in FIG. 2. The transmission/reception unit 41 transmits and receives various data (or information) to and from another terminal, device, apparatus, or system via the communication network N.

The screen generation unit 42, which is an example of a screen generation unit, is implemented by instructions from the CPU 401 illustrated in FIG. 2. The screen generation unit 42 generates various screens. In a case where the terminal device 10 executes a web application, the screen information is generated in a format of, for example, HyperText Markup Language (HTML), eXtensible Markup Language (XML), Cascading Style Sheets (CSS), or JAVASCRIPT. For this reason, the screen information may be referred to as a web application. In a case where the terminal device 10 executes a client application, the screen information is held by the terminal device 10, and the screen information representing the screen to be displayed is transmitted in a format of, for example, XML.

The determination unit 43, which is an example of a determination unit, is implemented by instructions from the CPU 401 illustrated in FIG. 2. The determination unit 43 performs various determinations described later.

The identification unit 44, which is an example of an identification unit, is implemented by instructions from the CPU 401 illustrated in FIG. 2. The identification unit 44 identifies a target image.

The text information generation unit 45, which is an example of a text information generation unit, is implemented by instructions from the CPU 401 illustrated in FIG. 2. The text information generation unit 45 acquires tacit knowledge comments from a tacit knowledge model or generates text information based on a large-scale language model 4005.

The update unit 46, which is an example of an update unit, is implemented by instructions from the CPU 401 illustrated in FIG. 2. The update unit 46 updates a tacit knowledge model described later.

The processing unit 47 is implemented by instructions from the CPU 401 illustrated in FIG. 2. The processing unit 47 performs an association process for associating three-dimensional image information and a captured image with text information, which is an example of generation information, in accordance with the processing requested by the user. The generation information is generated based on the three-dimensional image information and the captured image, as well as on inspection information. The association process is, for example, a process for causing the three-dimensional image information and the captured image to be displayed with the generation information on a single screen, a process for updating a first tacit knowledge model 4004A or a second tacit knowledge model 4004B, or a process for generating text information based on the first tacit knowledge model 4004A or the second tacit knowledge model 4004B. The processing unit 47 requests, for example, the screen generation unit 42 or the text information generation unit 45 to perform the processing in accordance with the content of the processing.

The selection unit 48 is implemented by instructions from the CPU 401 illustrated in FIG. 2. The selection unit 48 determines which of the first tacit knowledge model 4004A and the second tacit knowledge model 4004B is to be used. Examples of determination methods include user-based selection and automatic or semi-automatic determination. When a specific condition is satisfied, the determination is made automatically (without confirmation from the user) or semi-automatically (recommended to the user to request confirmation). The specific condition may be, for example, that a question sentence included in input information, such as audio or text information, is related to an item. For example, the specific condition may be that a question sentence included in the input information is related to the inspection content. In this case, since inappropriate text information may be generated based on the second tacit knowledge model 4004B, the first tacit knowledge model 4004A is preferably selected.

The storage/retrieval unit 49, which is an example of a memory control unit, is implemented by instructions from the CPU 401 illustrated in FIG. 2, as well as by the HD 404, a media I/F 411, and a DVD-RW drive 412 illustrated in FIG. 2. The storage/retrieval unit 49 performs processing to store various data in, or retrieve various data from, the storage unit 4000, a recording medium 411a, and a DVD-RW 412a. The storage unit 4000, the recording medium 411a, and the DVD-RW 412a are examples of storage units.

The storage unit 4000 stores an image information management DB 4001, a model shape management DB 4002, a caption model 4003, the first tacit knowledge model 4004A, the second tacit knowledge model 4004B, and the large-scale language model 4005.

The image information management DB 4001 manages three-dimensional image information on a property. The three-dimensional image information is information that visually represents an item (also referred to as a model) placed in the property. The model shape management DB 4002 manages three-dimensional model shape information of the item placed in the property. The image management server 40 is capable of generating the three-dimensional image information on the property based on the three-dimensional model shape information. The three-dimensional model shape information is information for drawing the item in three dimensions, such as a three-dimensional model of the item or a three-dimensional point group of the item. The three-dimensional model shape information may be represented by data formats such as polygonal data or Computer-Aided Design (CAD) data. The image information management DB 4001 or the model shape management DB 4002 may store a wide field image, such as an omnidirectional image of the property.

The caption model 4003 is generated by executing a learning process using a combination of an image and a caption comment as learning data and causes a computer to output a caption comment based on the image. The caption comment is explicit knowledge and is used as a term corresponding to tacit knowledge. The caption comment is represented by text data and is a comment for explaining an image among audio or text comments. A caption comment on a property or an item is associated with the identification information of the property or the item.

The first tacit knowledge model 4004A is generated by executing a learning process using, as learning data, a correspondence among the three-dimensional image information, a captured image, and inspection information associated with an item, and causes a computer to output a tacit knowledge comment based on the image. The tacit knowledge comment is represented by text data and is a comment other than a caption comment among audio or text comments. In other words, the tacit knowledge comment is a comment relating to content that has not appeared in the image. The first tacit knowledge model 4004A may be generated by executing a learning process using, as learning data, a correspondence among three-dimensional image information, a captured image, inspection information, and a comment associated with an item.

The second tacit knowledge model 4004B does not use inspection information for learning. In other words, the second tacit knowledge model 4004B is generated by executing a learning process using, as learning data, a correspondence between three-dimensional image information and a comment associated with an item and causes the computer to output a tacit knowledge comment based on the image.

The large-scale language model 4005 is a computer language model that is generated by executing a learning process using a huge amount of unlabeled text as learning data and is developed on an artificial neural network having a large number of parameters. The large-scale language model 4005 is sufficiently trained with any desired method for learning a context, such as the next sentence prediction or the masked language model, to capture many of syntax and meanings of human words. The next sentence prediction understands the context by determining, for example, whether a sentence 1 and a sentence 2 are continuous. The masked language model understands the context by masking a word in a sentence and predicting the masked word from the words before and after the masked word.

### Image Information Management Table

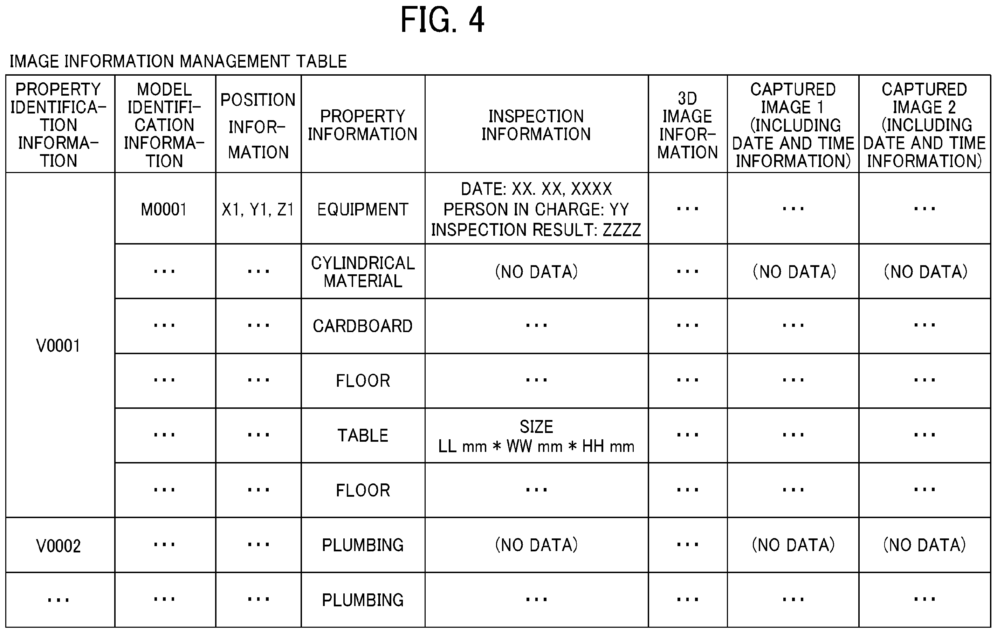

FIG. 4 is a conceptual diagram illustrating an image information management table. The storage unit 4000 stores the image information management DB 4001 that is structured using an image information management table as illustrated in FIG. 4.

The image information management table stores model identification information, position information, item information, inspection information, three-dimensional image information, and one or more captured images in association with property identification information. The term "property" refers to any space in which an item can be placed, such as a facility or a room in a facility. In addition, what kind of items are placed varies depending on the function of the facility.

The property identification information is information for uniquely identifying a property.

The model identification information is information for identifying an item placed in a property. Each item is associated with the three-dimensional model shape stored in the model shape management DB 4002 by the model identification information. Although the model identification information is substantially the same as the model identification information in the property information management server 20, the model identification information may be associated with the model identification information in the property information management server 20 in a conversion table.

The item information indicates the name of an item placed in a property. In FIG. 4, the names of items assumed to be in a construction or building site are displayed. However, the names of the items vary depending on the property. Although the property and the item are associated with each other in FIG. 4, the item may be registered alone regardless of the property.

The position information is information indicating the position of an item within a property generated as a virtual space by three-dimensional coordinates of XYZ. XYZ may be the center of gravity of the item or the coordinates of the vertices of a circumscribed cube.

The inspection information is inspection-related information when a user inspects an item in a property. The inspection information varies depending on the item and the purpose of the inspection. For example, the inspection information may indicate whether the item is abnormal, the dimensions, the inspection date and time, and the inspector. The inspection information is acquired from the property information management server 20. The property information management server 20 holds inspection information as a master. The image management server 40 acquires the inspection information from the property information management server 20 and stores the acquired inspection information. This is because the inspection of items is performed for the property information management server 20. For this reason, the inspection information in the image information management table may be present only for some items, or even when the inspection information is present, the inspection information may not necessarily be the latest inspection information.

The inspection information may include photographic information obtained by photographing the inspected item. In this case, the update unit 46 analyzes the photographic information, extracts the photographed item and features of the photographed item, such as the state of a scratch, thus handling the inspection information as string data.

In addition to the inspection information, for example, an instruction manual, a daily report, an estimate, and a drawing may be registered in the image information management table.

The three-dimensional image information is information visually representing an item, such as three-dimensional model shape information of the item and an omnidirectional image. Although the three-dimensional image information is included in the image information management table in FIG. 4, the three-dimensional image information may be stored in the model shape management DB 4002.

Captured images 1 and 2 are two-dimensional images acquired from the property information management server 20, together with the inspection information. The property information management server 20 holds a captured image as a master. The captured images 1 and 2 are, for example, planar images of an item captured by the inspector at the time of inspection. For this reason, when the inspection information is stored in the image information management DB 4001, the captured images 1 and 2 may also be stored in many cases.

The reason multiple captured images, such as the captured images 1 and 2, are present is that an item may be captured each time the item is inspected. Three or more captured images may be present. However, the most recent captured image is saved by overwriting the previously stored image. The captured images 1 and 2 have the date and time of image capturing.

### Functional Configuration of Property Information Management Server

Referring back to FIG. 3, the functional configuration of the property information management server 20 is described below.

The property information management server 20 includes a transmission/reception unit 21, a screen generation unit 22, and a storage/retrieval unit 29. These functional units are functions or means of functioning that are implemented by the operation of one or more hardware components illustrated in FIG. 2 in response to instructions from the CPU 401, based on a program deployed from the HD 404 to the RAM 403. The property information management server 20 further includes a storage unit 2000, which is implemented by the HD 404 illustrated in FIG. 2. The storage unit 2000 is an example of a storage unit.

In FIG. 3, all the functions are implemented on the single property information management server 20. Alternatively, the property information management server 20 may be configured such that the functions are distributed across multiple computers.

The transmission/reception unit 21, which is an example of a transmission unit or a reception unit, is implemented by instructions from the CPU 401 illustrated in FIG. 2 and the communication I/F 407 illustrated in FIG. 2. The transmission/reception unit 41 transmits and receives various data (or information) to and from another terminal, device, apparatus, or system via the communication network N.

The screen generation unit 22, which is an example of a screen generation unit, is implemented by instructions from the CPU 401 illustrated in FIG. 2. The screen generation unit 42 generates various screens. In a case where the terminal device 10 executes a web application, the screen information is generated in a format of, for example, HTML, XML, CSS, or JAVASCRIPT. For this reason, the screen information may be referred to as a web application. In a case where the terminal device 10 executes a client application, the screen information is held by the terminal device 10, and the screen information representing the screen to be displayed is transmitted in a format of, for example, XML.

The storage/retrieval unit 29, which is an example of a memory control unit, is implemented by instructions from the CPU 401 illustrated in FIG. 2, as well as by the HD 404, the media I/F 411, and the DVD-RW drive 412 illustrated in FIG. 2. The storage/retrieval unit 49 performs processing to store various data in, or retrieve various data from, the storage unit 2000, the recording medium 411a, and the DVD-RW 412a. The storage unit 2000, the recording medium 411a, and the DVD-RW 412a are examples of storage units.

### Property Management Information Management Table

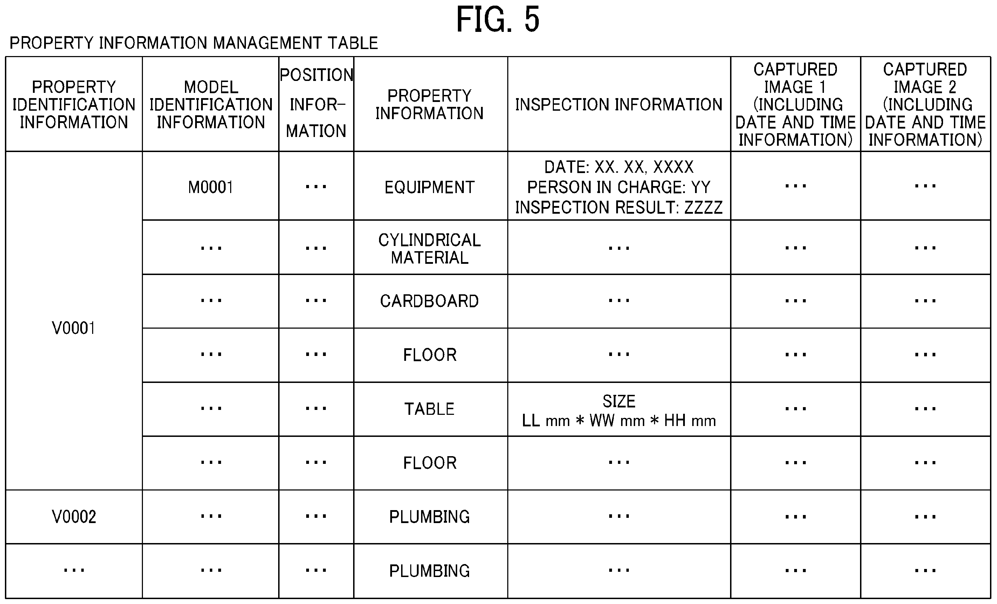

FIG. 5 is a conceptual diagram illustrating a property management information management table. The storage unit 2000 stores a property information management DB 2001 that is structured using a property management information management table as illustrated in FIG. 5.

The property management information management table stores model identification information, position information, item information, inspection information, and one or more captured images in association with property identification information. These pieces of stored information may be referred to as property management information. The contents of the table may be the same as those of the image information management table. In other words, three-dimensional image information is not held in the property management information management table. However, the inspection information and one or more captured images are recorded for all the items that have been inspected, even once. The inspection information and captured images stored in the property information management server 20 are inspection information directly registered by the user, and thus serve as a master (copy source) of the inspection information stored in the image management server 40. The captured images may be captured images of multiple items or may be images other than the captured images, such as layout diagrams.

Instead of the above-mentioned property information management DB 2001 that is structured using the property management information management table, the property information management DB 2001 that is structured using a property management information management table that stores position information, item information, and inspection information in association with model identification information, instead of property identification information, may be used.

### Example of Update of Model and Generation of Text Information

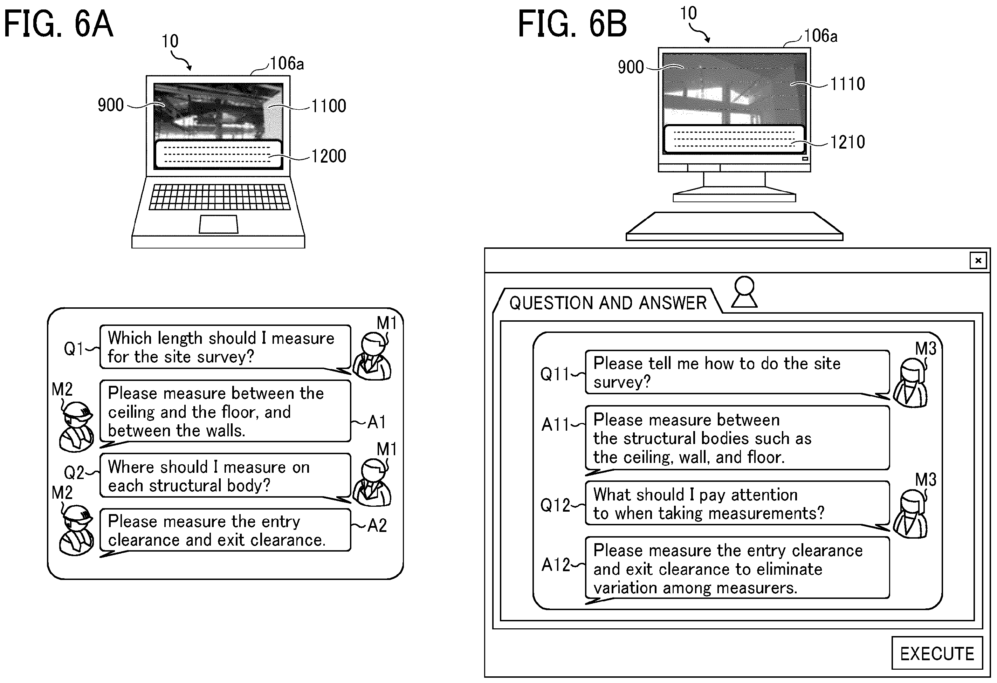

A model update method and a text information generation method are described below with reference to FIGS. 6A to 7B.

In FIGS. 6A to 7B, the inspection information is not used for updating the model and generating the text information. However, learning can be similarly performed by replacing or adding, for example, an utterance Q1 in a conversation with the inspection information.

FIGS. 6A and 6B are diagrams illustrating display screens on the terminal device 10 in a model update process and a text information generation process, respectively. FIG. 6A is a diagram illustrating the model update process. The display control unit 13 of the terminal device 10 causes a display screen 900 received from the image management server 40 to be displayed on the display 106a. The display screen 900 includes a target image 1100 and text 1200.

The input reception unit 12 of the terminal device 10 receives, via the microphone 109b, audio information indicating a conversation including utterances Q1, A1, Q2, and A2 between a data provider M1 and a data provider M2, as input information input by a data provider on the displayed display screen 900. The data providers M1 and M2 preferably have a wealth of knowledge about the business, including tacit knowledge. Update of the tacit knowledge model by the conversation between the data providers M1 and M2 allows the users to acquire useful tacit knowledge comments.

The identification unit 44 identifies the target image 1100, which is a portion of the display screen 900 excluding the text 1200.

The determination unit 43 determines the relevance between a caption comment acquired from the caption model 4003 using the target image 1100 and the conversation including the utterances Q1, A1, Q2, and A2.

The update unit 46 updates the tacit knowledge model with learning data including the target image 1100 and a comment determined to have a low relevance among the utterances Q1, A1, Q2, and A2 as a tacit knowledge comment. The update unit 46 updates the caption model 4003 with learning data including the target image 1100 and a comment determined to have a high relevance as a caption comment.

Thus, the tacit knowledge model learns the correspondence between the target image 1100 and the utterances Q1, A1, Q2, and A2. Features are extracted from the target image 1100 by some feature extraction models suitable for images, such as a convolutional neural network (CNN). The features represent, for example, what is shown where, or the content of work performed in the image. Thus, the tacit knowledge model is capable of learning the correspondence between the features of the image and the utterances Q1, A1, Q2, and A2.

FIG. 6B is a diagram illustrating the text information generation process.

The display control unit 13 of the terminal device 10 causes the display screen 900 received from the image management server 40 to be displayed on the display 106a. The display screen 900 includes an image 1110 and text 1210.

The input reception unit 12 of the terminal device 10 receives, via the microphone 109b, audio information indicating questions Q11 and Q12 asked by a user M3, as input information input by a user on the displayed display screen 900.

The identification unit 44 identifies the image 1110 not including the text 1210 as a target image.

The text information generation unit 45 acquires a tacit knowledge comment based on the tacit knowledge model, using the image 1110. The tacit knowledge model is capable of extracting features from the image 1110, determining that the features of the image 1110 in FIG. 6B are similar to those of the image 1110 at the time of update, and specifying the utterances Q1, A1, Q2, and A2 related to the image 1110. The utterances Q1, A1, Q2, and A2 are tacit knowledge comments.

The text information generation unit 45 generates text information on answers A11 and A12 to the questions Q11 and Q12, respectively, based on the large-scale language model 4005, using, for example, the tacit knowledge comments (the utterances Q1, A1, Q2, and A2) and the questions Q11 and Q12.

The display control unit 13 of the terminal device 10 causes the text information on the answers A11 and A12 received from the image management server 40 to be displayed on the display 106a.

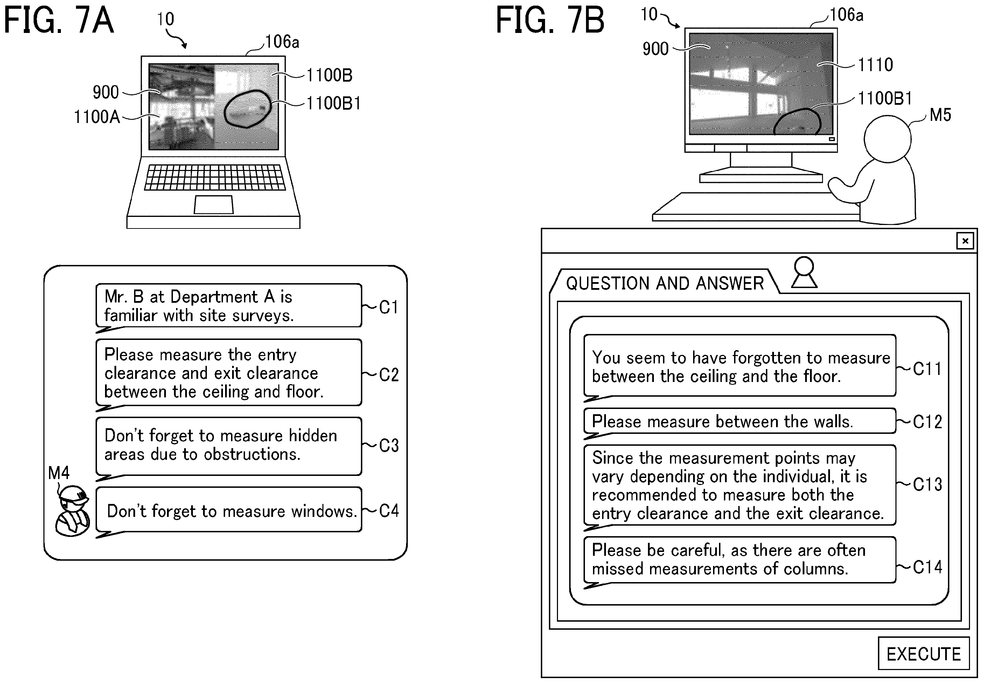

FIGS. 7A and 7B are other diagrams illustrating display screens on the terminal device 10 in a model update process and a text information generation process, respectively.

A case where a question sentence is not used at the time of model update and text information generation is described below with reference to FIGS. 7A and 7B.

FIG. 7A is a diagram illustrating the model update process. FIG. 7A illustrates an example in which the tacit knowledge model is updated not by a conversation between data providers but by audio information of a single data provider and a partial image.

The display control unit 13 of the terminal device 10 causes the display screen 900 received from the image management server 40 to be displayed on the display 106a. The display screen 900 includes a first image 1100A and a second image 1100B.

The input reception unit 12 of the terminal device 10 receives, via the keyboard 110a, text information indicating comments C1 to C4 by a data provider M4, as input information input by a data provider on the displayed display screen 900.

The input reception unit 12 receives, via the mouse 110b, operation information indicating an operation performed by the data provider M4 to identify a partial image 1100B1 of the second image 1100B, as input information input by the data provider M4 on the displayed display screen 900.

The identification unit 44 may specify the partial image 1100B1 as a target image. Alternatively, the identification unit 44 may specify the first image 1100A or the second image 1100B as a target image.

The determination unit 43 determines the relevance between a caption comment acquired from the caption model 4003 using the target image and the comments C1 to C4.

The update unit 46 updates the tacit knowledge model with learning data including the partial image 1100B1 and a comment determined to have a low relevance among the comments C1 to C4 as a tacit knowledge comment. The update unit 46 updates the caption model 4003 with learning data including the partial image 1100B1 and a comment determined to have a high relevance as a caption comment.

Thus, the tacit knowledge model learns the correspondence between the partial image 1100B1 and the comments C1 to C4. Features are extracted from the partial image 1100B1 by some feature extraction models suitable for images, such as a CNN. The features represent, for example, what is shown where, or the content of work performed. Thus, the tacit knowledge model is capable of learning the correspondence between the features of the image and the comments C1 to C4.

FIG. 7B is a diagram illustrating the text information generation process. The display control unit 13 of the terminal device 10 causes the display screen 900 received from the image management server 40 to be displayed on the display 106a. The display screen 900 includes the image 1110.

A user M5 does not input information into the displayed display screen 900. The input reception unit 12 does not receive information input by a user into the display screen 900. The identification unit 44 identifies the image 1110, which is the entire display screen 900, as a target image.

When the user M5 performs an operation for identifying the partial image 1100B1 in the display screen 900, the input reception unit 12 receives, via the mouse 110b, operation information indicating the operation for identifying the partial image as input information. In this case, the identification unit 44 identifies the partial image in the display screen 900 as a target image according to the operation information.

The text information generation unit 45 acquires a tacit knowledge comment based on the tacit knowledge model, using the partial image 1100B1. The tacit knowledge model is capable of determining that the features of the partial image 1110B1 in FIG. 7B are similar to those of the partial image 1110B1 at the time of update, and specifying the comments C1 to C4 related to the partial image 1110B1. The tacit knowledge model extracts the comments C1 to C4 as tacit knowledge comments.

The text information generation unit 45 generates text information on comments C11 to C14 based on the large-scale language model 4005, using, for example, the tacit knowledge comments. The text information generation unit 45 may generate text information using a preset fixed question when no question sentence is input, instead of using a method that does not use any question.

The display control unit 13 of the terminal device 10 causes the text information on the comments C11 to C14 received from the image management server 40 to be displayed on the display 106a.

### Operations or Processes

### Learning Phase (Model Update)

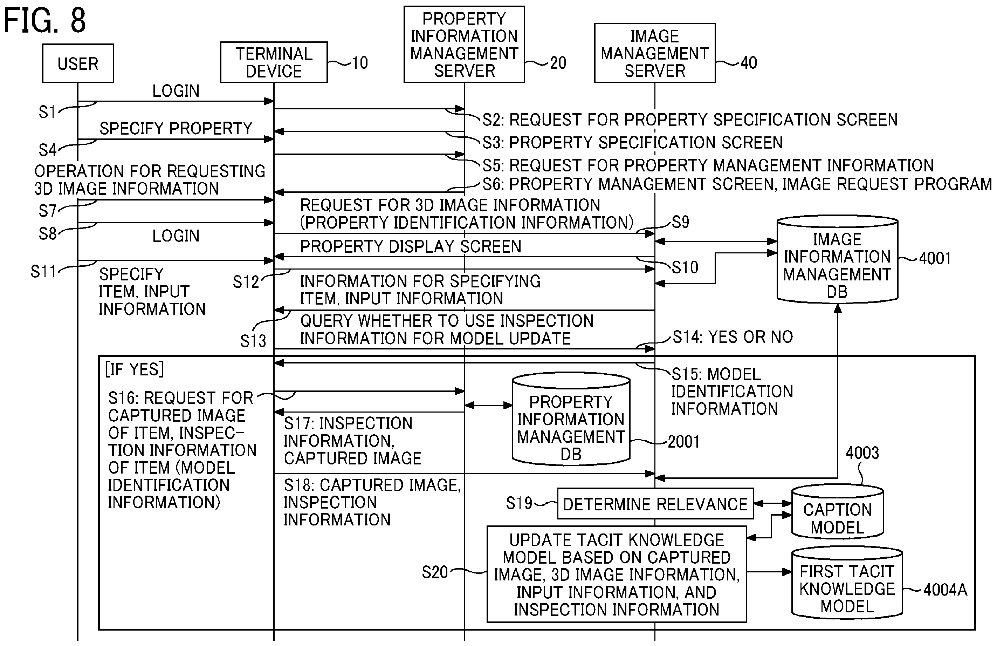

A model update process in which the first tacit knowledge model 4004A learns data is described below with reference to FIG. 8.

FIG. 8 is a sequence diagram illustrating a model update process.

In step S1, the user inputs a login operation into the terminal device 10. This login is a login to the property information management server 20. The input reception unit 12 of the terminal device 10 receives the login operation. The login method may be any existing method. It is assumed that the login is successful.

The user logs in to the property information management server 20 and then logs in to the image management server 40. Alternatively, the user may log in to the image management server 40 first and then log in to the property information management server 20.

In step S2, in response to the successful login, the transmission/reception unit 11 of the terminal device 10 transmits a request for a property specification screen 200 to the property information management server 20.

In step S3, the transmission/reception unit 21 of the property information management server 20 receives the request for the property specification screen 200. The screen generation unit 22 generates the property specification screen 200, and the transmission/reception unit 21 transmits the screen information of the property specification screen 200 to the terminal device 10.

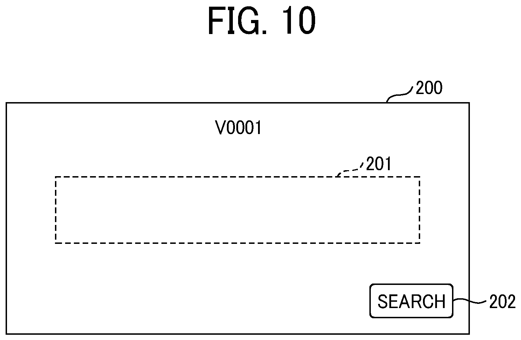

In step S4, the transmission/reception unit 11 of the terminal device 10 receives the screen information of the property specification screen 200. The display control unit 13 causes the property specification screen 200 to be displayed as illustrated in FIG. 10. The user inputs property identification information (for example, V0001) into the displayed property specification screen 200. The input reception unit 12 of the terminal device 10 receives the property identification information.

In step S5, the transmission/reception unit 11 of the terminal device 10 specifies the property identification information and transmits a request for the property management information to the property information management server 20.

In step S6, the transmission/reception unit 21 of the property information management server 20 receives the request for the property management information, and the storage/retrieval unit 29 searches the property information management DB 2001 using the property identification information. The property management information is information on a property associated with the property identification information. The screen generation unit 22 of the property information management server 20 generates a property management screen 210 on which the property management information is displayed, and the transmission/reception unit 21 transmits screen information of the property management screen 210 to the terminal device 10.

The transmission/reception unit 21 transmits an image request program to the terminal device 10 so that the terminal device 10 can acquire three-dimensional image information in response to a request for property management information. The image request program is, for example, a web application. The web application is installed in the property information management server 20 with the authorization of the administrator of the property information management server 20 acquired by the administrator of the image management server 40. Alternatively, a Uniform Resource Locator (URL) with the image request program may be transmitted to the terminal device 10.

Since the web application is used to acquire three-dimensional image information from the image management server 40, the web application has the function of connecting to the image management server 40 and requesting or displaying three-dimensional image information.

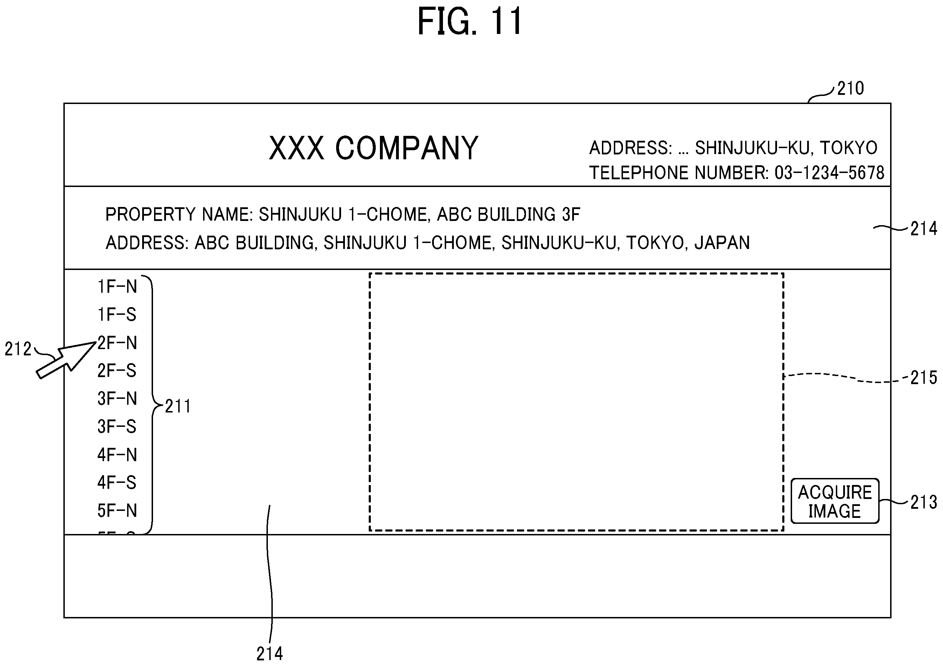

In step S7, the transmission/reception unit 11 of the terminal device 10 receives the screen information of the property management screen 210 and the image request program. The display control unit 13 causes the property management screen 210 to be displayed as illustrated in FIG. 11. Thus, the property management information is displayed. The user performs an operation for requesting three-dimensional image information of the property in response to the property management information being displayed. Specifically, for example, the user presses an image acquisition button 213 illustrated in FIG. 11 to request the three-dimensional image information of the property in response to the property management information being displayed. The input reception unit 12 of the terminal device 10 receives the operation for requesting three-dimensional image information of the property. The three-dimensional image information of the property is the three-dimensional image information of an item placed in the property generated as a virtual space. The item is represented using 3D model shape information. Since the property has already been specified, a request for the three-dimensional image information of the property may be transmitted to the image management server 40 without the operation of the user.

The property management screen 210 includes a first display area 214 for displaying item-related information acquired from the property information management server 20 and a second display area 215 for displaying three-dimensional image information of an item acquired from the image management server 40. At the stage of step S7, the property management information is displayed in the first display area 214, whereas nothing is displayed in the second display area 215.

In step S8, when the user is not logged in to the image management server 40, the user inputs a login operation into the terminal device 10. This login operation is performed on the image management server 40.

The input reception unit 12 of the terminal device 10 receives the login operation. The login method may be any existing method. It is assumed that the login is successful. The image management server 40 may omit the login operation of the user by using, for example, single sign-on.

In step S9, the terminal device 10 executes the image request program to request the three-dimensional image information.

Accordingly, the transmission/reception unit 11 specifies the property identification information of the property selected by the user and transmits a request for the three-dimensional image information of the property to the image management server 40. The transmission/reception unit 11 may transmit the URL of the property information management server 20 to the image management server 40 so that the terminal device 10 can redirect to the property information management server 20. The three-dimensional image information of the property is an image of an item placed in the property as a virtual space. Since the item is represented using the 3D model shape information, the terminal device 10 projects the three-dimensional model shape of the item onto a two-dimensional plane to generate a planar image. The user can browse an item while changing the viewpoint. The transmission/reception unit 11 may transmit the property management information acquired from the property information management server 20 to the image management server 40 so that the image management server 40 can cause the property management information and the three-dimensional image information of the property to be displayed on one screen. The image request program receives property management information from the web application connected to the property information management server 20 as, for example, a URL parameter.

In step S10, the transmission/reception unit 41 of the image management server 40 receives, for example, the request for the three-dimensional image information of the property together with the property identification information. The storage/retrieval unit 49 searches the image information management DB 4001 using the property identification information and acquires the three-dimensional image information of each item. The storage/retrieval unit 49 may acquire the layout diagram of the property from the image information management DB 4001. The processing unit 47 requests the screen generation unit 42 to generate a screen including the three-dimensional image information and the layout diagram of the property. The screen generation unit 42 generates a screen corresponding to the second display area 215 in which the three-dimensional image information of each item is placed.

The transmission/reception unit 41 transmits the three-dimensional image information on the screen corresponding to the second display area 215 to the terminal device 10. The three-dimensional image information of each item included in the three-dimensional image information is three-dimensional image information of all items included and placed in the property, and the user can change the viewpoint as desired.

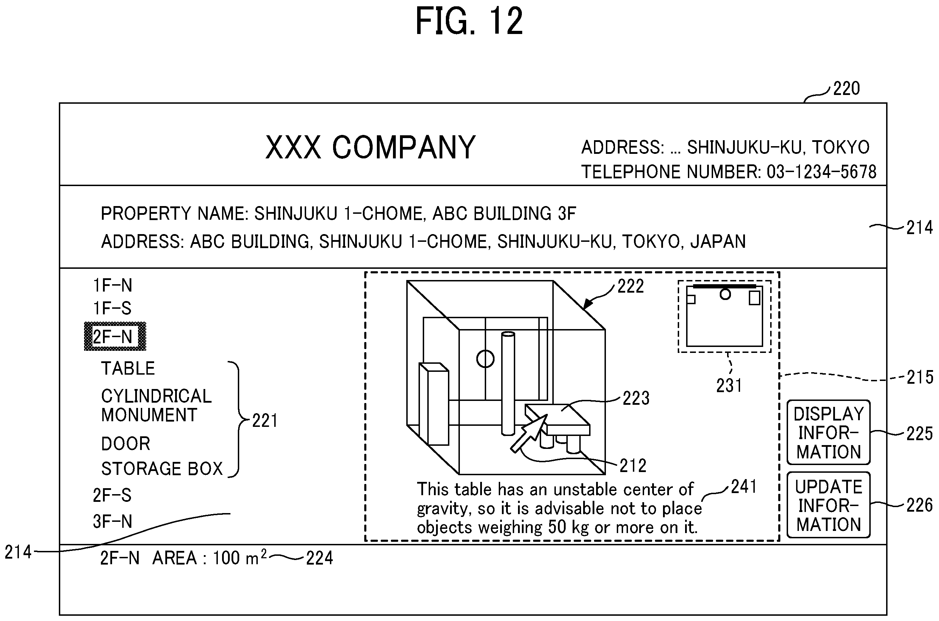

In step S11, the transmission/reception unit 11 of the terminal device 10 receives the screen information of the screen corresponding to the second display area 215, and the display control unit 13 causes a property display screen 220 including the first display area 214 and the second display area 215 to be displayed as illustrated in FIG. 12. The three-dimensional image information of each item and a layout diagram 231 of the items are displayed in the second display area 215. In the first display area 214, for example, an item list 221 generated from the property management information is displayed. The item list 221 is a list of items placed in the property. Thus, the item list 221 and the three-dimensional image information of the property are displayed on one screen. The user specifies an item from the three-dimensional image information of the property. When the user specifies the item, the inspection information and the captured image of the item can be requested. The input reception unit 12 of the terminal device 10 receives an operation for specifying the item. The item may be specified by, for example, coordinates clicked by the user, or model identification information may be specified by the coordinates.

The user inputs a comment on the item into the terminal device 10. The comment is, for example, a comment of text information or an audio comment as described above with reference to FIGS. 6A to 7B. The comment may be referred to as input information.

The comment can be a tacit knowledge comment. The comment may also include a caption comment describing the item.

In step S12, when the user presses an information update button 226, the transmission/reception unit 11 of the terminal device 10 transmits information indicating that the information update button 226 has been pressed, information for identifying the item, and the input information to the image management server 40.

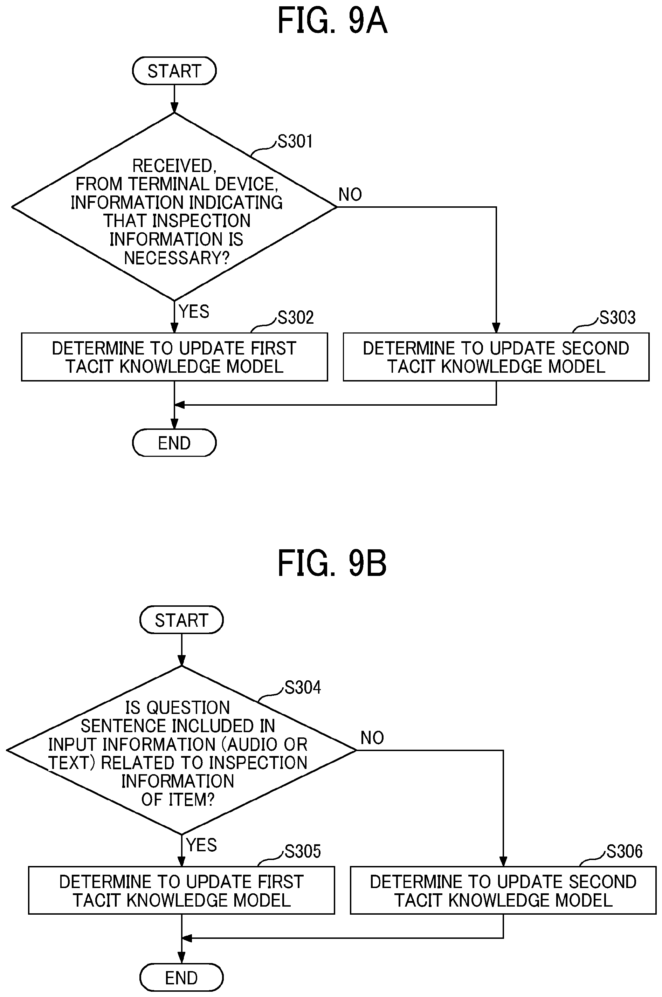

In step S13, the transmission/reception unit 41 of the image management server 40 receives the information indicating that the information update button 226 has been pressed, the information for identifying the item, and the input information. The selection unit 48 determines to query the user to determine which of the first tacit knowledge model 4004A and the second tacit knowledge model 4004B is to be updated. The transmission/reception unit 41 queries the terminal device 10 as to whether to use the inspection information for the model update. The determination process performed by the selection unit 48 is described later with reference to FIG. 9.

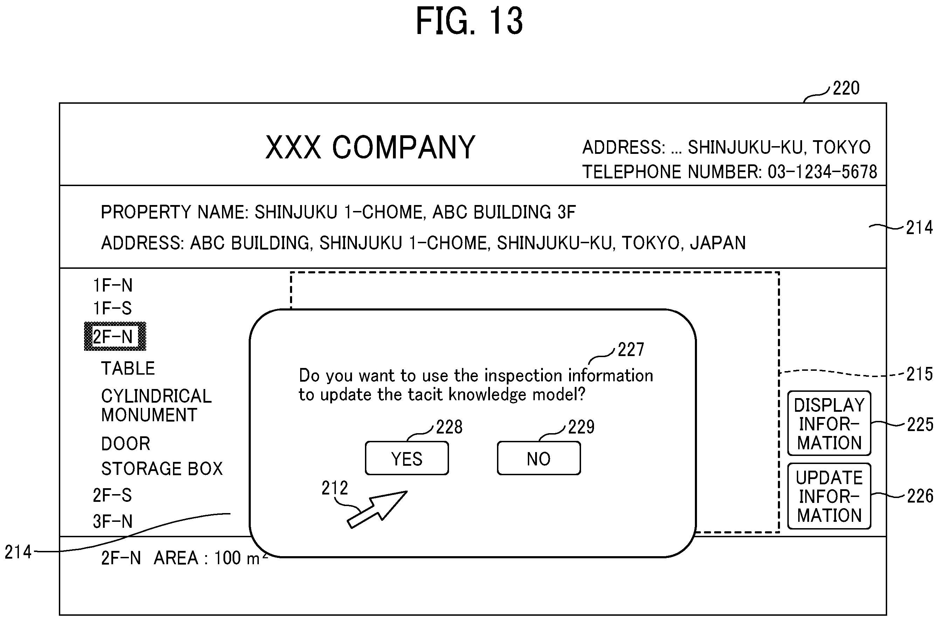

In step S14, the transmission/reception unit 11 of the terminal device 10 receives the query, and the display control unit 13 causes a message 227 indicating whether to use the inspection information for the model update to be displayed on the property display screen 220 as illustrated in FIG. 13. The user confirms the message 227 and presses a YES button 228 or a NO button 229. The input reception unit 12 receives the pressing. The transmission/reception unit 11 of the terminal device 10 transmits YES or NO to the image management server 40. The transition from FIG. 12 to FIG. 13 may be performed on the terminal device 10 without communicating with the image management server 40.

In step S15, the transmission/reception unit 41 of the image management server 40 receives YES or NO, and the selection unit 48 determines whether the inspection information is necessary based on the received YES or NO.

A case where the inspection information is necessary (YES) is described below with continued reference to FIG. 8.

To acquire the inspection information, the storage/retrieval unit 49 specifies the model identification information of the item having the closest position information based on information for specifying the item (in this case, position information) from the image information management DB 4001. The transmission/reception unit 41 transmits the model identification information to the terminal device 10.

When the information for specifying the item transmitted in step S12 is the model identification information, the search of the image information management DB 4001 is not necessary. The image management server 40 transmits the model identification information to acquire the latest inspection information from the property information management server 20.

In step S16, the transmission/reception unit 11 of the terminal device 10 receives the model identification information. For example, the image management server 40 notifies the terminal device 10 of the URL of the property information management server 20 and redirects the terminal device 10. Accordingly, the transmission/reception unit 11 of the terminal device 10 specifies the model identification information and transmits a request for the inspection information and the captured image of the item to the property information management server 20.

In step S17, the transmission/reception unit 21 of the property information management server 20 receives the request for the inspection information and the captured image of the item, and the storage/retrieval unit 29 searches the property information management DB 2001 using the model identification information to acquire the inspection information and the captured image. The transmission/reception unit 21 transmits the inspection information and the captured image to the terminal device 10.

In step S18, when the transmission/reception unit 11 of the terminal device 10 receives the inspection information and the captured image, the transmission/reception unit 11 transmits the inspection information and the captured image to the image management server 40 together with the model identification information.

In step S19, the transmission/reception unit 41 of the image management server 40 receives the inspection information and the captured image. The storage/retrieval unit 49 stores the inspection information and the captured image in the image information management DB 4001 in association with the model identification information. The processing unit 47 starts updating the first tacit knowledge model 4004A. First, the determination unit 43 acquires a caption comment specified by the model identification information from the caption model 4003 and determines the relevance between the caption comment and the comment included in the input information received in step S12. The determination unit 43 may determine the relevance between the acquired caption comment and the entire comment included in the input information received in step S12 or may divide the comment included in the input information received in step S12 into multiple comments and determine the relevance between the acquired caption comment and each divided comment.

In step S20, the update unit 46 updates the caption model 4003 by associating the comment determined to have a high relevance in step S19 as a caption comment with the model identification information.

Since the selection unit 48 has received a response of YES, indicating that the inspection information is necessary, the selection unit 48 determines to update the first tacit knowledge model 4004A. The update unit 46 updates the first tacit knowledge model 4004A with learning data including the comment determined to have a low relevance in the step S19 and the inspection information, the three-dimensional image information of the item associated with the comment and the inspection information (specified in the step S12), and the captured image. In other words, the correspondence among the three-dimensional image information, the captured image, the comment, and the inspection information associated with the item is learned. Features are extracted from the three-dimensional image information and the captured image of the item by some feature extraction models suitable for images, such as CNN. The features represent, for example, what is shown where, or the content of work performed. Thus, the first tacit knowledge model 4004A is capable of learning the correspondence among the features extracted from the three-dimensional image information and the captured image of the item, the comment associated with the item, and the inspection information associated with the item.

It is not necessary to use both the comment and the inspection information; the first tacit knowledge model 4004A can be updated without the comment.

FIGS. 9A and 9B are flowcharts, each illustrating a process in which the selection unit 48 determines whether to update the first tacit knowledge model 4004A or to update the second tacit knowledge model 4004B. In step S301 of FIG. 9A, the selection unit 48 determines whether a response of YES, as information indicating that the inspection information is necessary, is received from the terminal device 10.

When the selection unit 48 determines that the information indicating that the inspection information is necessary is received (YES in step S301), in step S302, the selection unit 48 determines to update the first tacit knowledge model 4004A.

By contrast, when the selection unit 48 determines that the information indicating that the inspection information is necessary is not received (NO in step S301), in step S303, the selection unit 48 determines to update the second tacit knowledge model 4004B.

In step S304 of FIG. 9B, the selection unit 48 determines whether a question sentence included in the input information, such as audio or text information, received from the terminal device 10 is related to the inspection information of the item. For example, when the input information includes inspection information such as "What kind of response is conceivable if inspection information is taken into consideration?," the selection unit 48 determines that the question sentence is related to the inspection information of the item.

When the selection unit 48 determines that the question sentence is related to the inspection information of the item (YES in step S304), in step S305, the selection unit 48 determines to update the first tacit knowledge model 4004A.

By contrast, when the selection unit 48 determines that the question sentence is not related to the inspection information of the item (NO in step S304), in step S306, the selection unit 48 determines to update the second tacit knowledge model 4004B.

Although the model update has been described as an example with reference to FIGS. 9A and 9B, the flows can be applied to the selection of a model to be used for the generation of text information.

### Examples of Screens

FIG. 10 is a diagram illustrating the property specification screen 200 for inputting property identification information. The property specification screen 200 includes a property identification information input field 201 and a search button 202. When the user inputs the property identification information in the property identification information input field 201 and presses the search button 202, a list of room numbers in FIG. 11 is displayed on the property management screen 210.

FIG. 11 is a diagram illustrating the property management screen 210. The property management screen 210 includes the first display area 214 for displaying item-related information acquired from the property information management server 20 and the second display area 215 for displaying three-dimensional image information of an item acquired from the image management server 40. The first display area 214 includes a room number list 211, which is a list of room numbers of the property specified by the property identification information. The room number list 211 corresponds to property management information, and includes items included in each property. Depending on the property, room numbers may not be displayed, and the property specification screen 200 of FIG. 10 may transition to FIG. 12 to display the three-dimensional image information of the property. The user selects, with a mouse cursor 212, a room number whose three-dimensional image information is to be displayed. When the user presses the image acquisition button 213, the property display screen 220 is displayed.

FIG. 12 is a diagram illustrating the property display screen 220. The property display screen 220 includes the first display area 214 and the second display area 215. The item list 221 is displayed in the first display area 214 of the property display screen 220. The second display area 215 of the property display screen 220 includes three-dimensional image information 222 and the layout diagram 231. The layout diagram 231 is a plan view indicating the position of items placed in the property. The item list 221 is displayed on the property display screen 220. The items in this room are a table, a cylindrical monument, a door, and a storage box. The three-dimensional image information 222 of these items, including three-dimensional image information 223 of the table, is displayed on the property display screen 220.

The user can select, with a mouse cursor 212, an item whose inspection information is to be displayed from the three-dimensional image information. Accordingly, the coordinates of the item are determined as information for identifying the item. Alternatively, the user may specify an item from the item list 221. **In** this case, the model identification information is specified at the time of selection.

**In** FIG. 12, a size (floor area) 224 is displayed as information on the property.

The size (floor area) 224 may be a measured value or may be included in the property management information.

The size (floor area) 224 is displayed as information on the property in the first display area 214 of the property display screen 220. **In** the second display area 215, input information 241 is displayed, indicating "This table has an unstable center of gravity, so it is advisable not to place objects weighing 50 kg or more on it." The image management server 40 is capable of updating the first tacit knowledge model 4004A or the second tacit knowledge model 4004B using the input information 241 and the inspection information. The size (floor area) 224 can be a caption comment as information on the property.

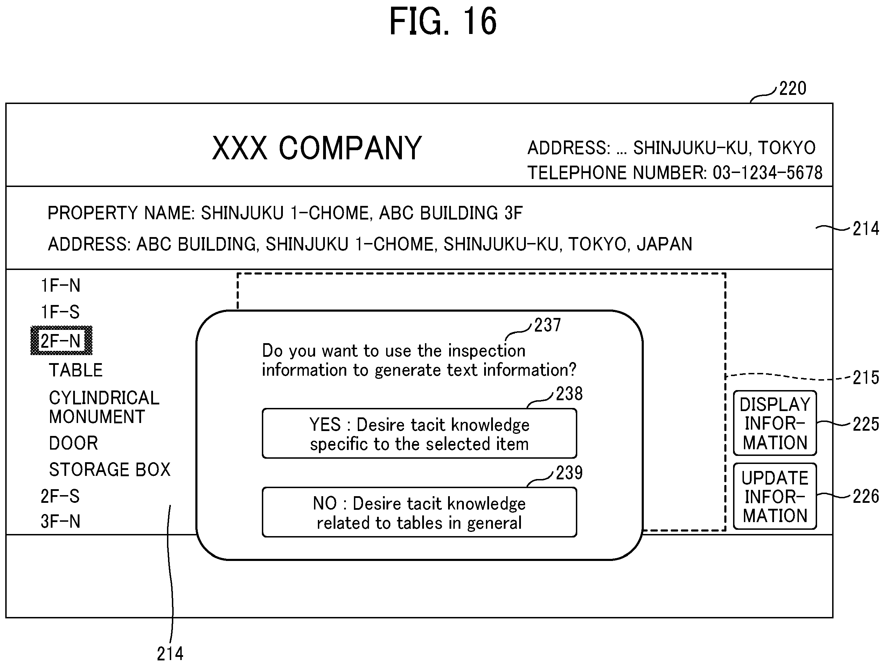

When the user presses the information update button 226, a message illustrated in FIG. 13 is displayed in a pop-up window. Thereafter, the first tacit knowledge model 4004A or the second tacit knowledge model 4004B is updated. Similarly, when an information display button 225 is pressed, a message illustrated in FIG. 16 is displayed. Thereafter, text information generated based on the tacit knowledge comment is displayed.

When the user presses the information update button 226, a tacit knowledge model update request is transmitted to the image management server 40. As a result, the message 227 is displayed, querying whether to update the first tacit knowledge model 4004A or to update the second tacit knowledge model 4004B.

FIG. 13 is a diagram illustrating the message 227 displayed in a pop-up window on the property display screen 220. The message 227 queries the user as to whether to use the inspection information for the model update. The user presses the YES button 228 to update the first tacit knowledge model 4004A using the inspection information and presses the NO button 229 to update the second tacit knowledge model 4004B without using the inspection information. The determination is made based on whether the input information 241 is specific to the item or common to items of the same category.

### Inference Phase (Generation of Text Information)

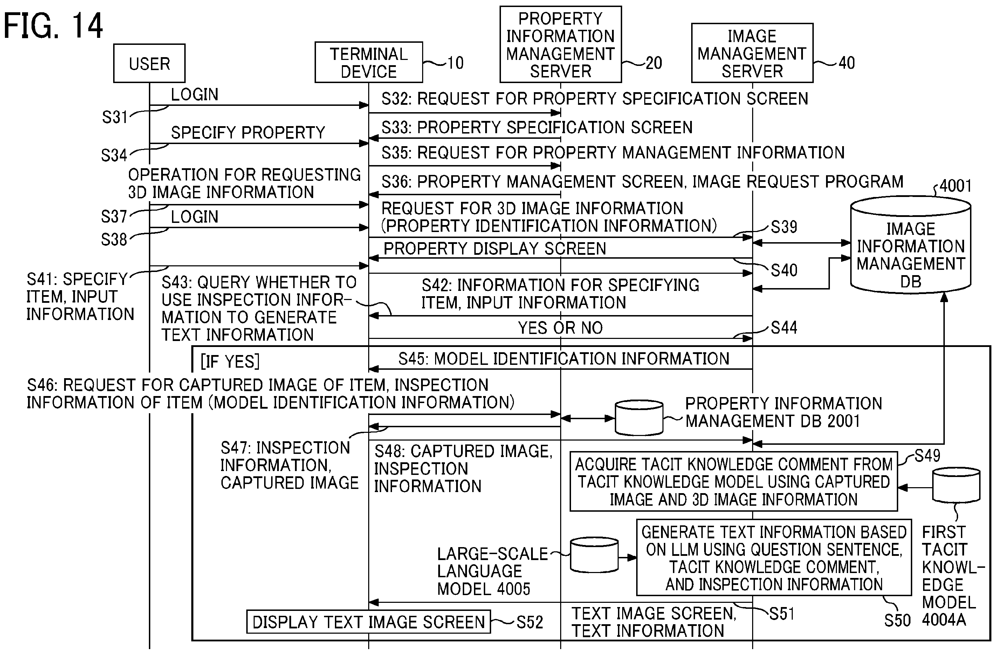

A text information generation process using the first tacit knowledge model 4004A is described below with reference to FIG. 14.

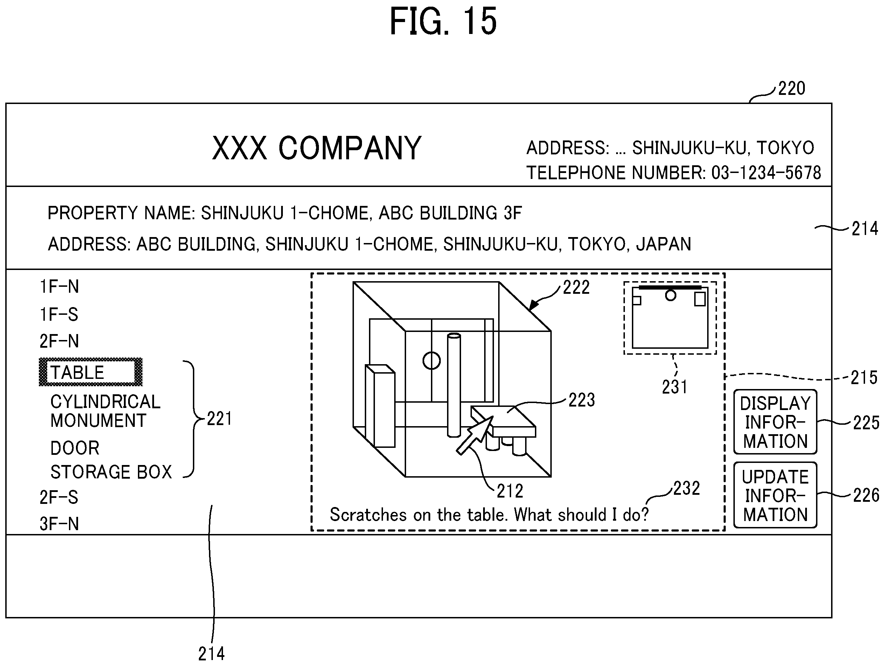

FIG. 14 is a sequence diagram illustrating a text information generation process using the first tacit knowledge model 4004A. The following description, with reference to FIG. 14, focuses on the differences from FIG. 8. Steps S31 through S42 may be performed similarly to steps S1 through S12 in FIG. 8. However, in step S41, the user inputs a question sentence 232 about the item and presses the information display button 225 as illustrated in FIG. 15.

In step S43, the transmission/reception unit 41 of the image management server 40 receives information indicating that the information display button 225 has been pressed, information for identifying the item, and the input information. The selection unit 48 determines to query the user to determine which of the first tacit knowledge model 4004A and the second tacit knowledge model 4004B is to be used to generate text information. The transmission/reception unit 41 queries the terminal device 10 as to whether to use the inspection information to generate the text information.

In step S44, the transmission/reception unit 11 of the terminal device 10 receives the query, and the display control unit 13 causes a message 237 indicating whether to use the inspection information to generate the text information to be displayed on the property display screen 220 as illustrated in FIG. 16. The user confirms the message 237 and presses a YES button 238 or a NO button 239. The determination criteria will be described later. The input reception unit 12 receives the pressing. The transmission/reception unit 11 of the terminal device 10 transmits YES or NO to the image management server 40.

In step S45, the transmission/reception unit 41 of the image management server 40 receives YES or NO, and the selection unit 48 determines whether the inspection information is necessary based on the received YES or NO.

A case where the inspection information is necessary (YES) is described below with continued reference to FIG. 14.

The storage/retrieval unit 49 specifies the model identification information of the item having the closest position information based on information for specifying the item (in this case, position information) from the image information management DB 4001. The transmission/reception unit 41 transmits the model identification information to the terminal device 10. When the information for specifying the item transmitted in step S42 is the model identification information, the search of the image information management DB 4001 is not necessary. The image management server 40 transmits the model identification information to acquire the latest inspection information from the property information management server 20.

Subsequent steps S46 through S48 may be performed similarly to steps S16 through S18 in FIG. 8.

In step S49, when the transmission/reception unit 41 of the image management server 40 receives the inspection information and the captured image, the storage/retrieval unit 49 stores the inspection information and the captured image in the image information management DB 4001 in association with the model identification information. The processing unit 47 requests the text information generation unit 45 to generate text information. Since it is determined to generate text information using the inspection information, the text information generation unit 45 acquires a tacit knowledge comment corresponding to the three-dimensional image information and the captured image of the item from the first tacit knowledge model 4004A. The first tacit knowledge model 4004A extracts features of the three-dimensional image information and the captured image of the item to specify either the inspection information corresponding to the features or both the inspection information and the comment corresponding to the features. The tacit knowledge model extracts either the inspection information or both the inspection information and the comment as tacit knowledge comments.

In step S50, the text information generation unit 45 acquires text information generated by the large-scale language model 4005 using the tacit knowledge comment, the input information (question sentence), and the inspection information. The large-scale language model 4005 is capable of generating more detailed text information using the tacit knowledge comment, the input information (question sentence), and the inspection information. The text information generation unit 45 may convert audio information included in the input information into text information. The text information generated by the text information generation unit 45 may be either audio information or text information.

The text information generation unit 45 may generate the text information without using any inspection information or question sentence. The text information generation unit 45 may generate a fixed question in the system and use the fixed question. In this case, the question sentence is not visible to the user. Alternatively, the text information generation unit 45 may generate a fixed question in the system, cause the fixed question to be displayed on a display to prompt the user to select the fixed question, and use the selected question.

Although the inspection information is not essential as described above, generating text information from the large-scale language model 4005 using the inspection information provides more detailed information on the item. For example, when the inspection information includes the degree of damage of the item, text information including an appropriate handling according to the degree of damage can be generated.

In step S51, the processing unit 47 associates the three-dimensional image information of the item corresponding to the model identification information with the text information and requests the screen generation unit 42 to display these pieces of information. The screen generation unit 42 generates a screen corresponding to the second display area 215 in which the text information is displayed in association with the three-dimensional image information and the captured image of the item. The screen generation unit 42 may perform an update process of adding only the text information to the screen corresponding to the second display area 215. The transmission/reception unit 41 of the image management server 40 transmits the generated text information to the terminal device 10 together with the screen information of the screen corresponding to the second display area 215. The transmission/reception unit 11 of the terminal device 10 receives the screen information of the screen corresponding to the second display area 215 and the text information transmitted from the image management server 40.

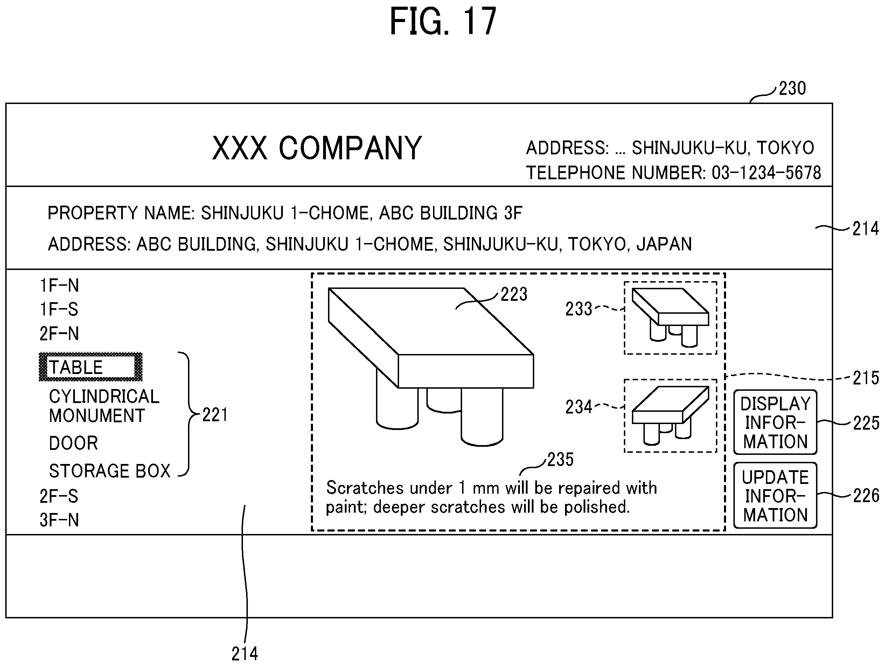

In step S52, the transmission/reception unit 11 of the terminal device 10 receives the first display area 214 and the text information, and the display control unit 13 causes a text display screen 230 including the first display area 214 and the second display area 215 to be displayed as illustrated in FIG. 17. Alternatively, the conversion unit 15 may convert the received text information into audio information, and the audio control unit 14 may cause the speaker 109a to reproduce the converted text information. When the received text information is audio information, the text information is reproduced by the speaker 109a, or the conversion unit 15 converts the received text information into text information so that the converted text information is displayed on the display 106a.

### Examples of Inference Phase screens

Although the screens displayed by the terminal device 10 in the inference phase are substantially the same as those illustrated in FIGS. 10 to 12, the user inputs information (question sentence) as input information and presses the information display button 225 on the property display screen 220 in FIG. 12.

FIG. 15 is a diagram illustrating the property display screen 220 in an inference phase. The property display screen 220 is an example of a first display screen. The property display screen 220 includes the first display area 214 and the second display area 215.

FIG. 15 illustrates the same configuration as that of FIG. 12. However, in FIG. 15, the user presses the three-dimensional image information 223 of the table to input the question sentence 232 as input information. In the second display area 215, the question sentence 232 as input information is displayed in association with the three-dimensional image information of the table. For example, the question sentence 232 in FIG. 15 reads "Scratches on the table. What should I do?" Along with the question sentence 232, the user presses the information display button 225 to request the generation of text information using the tacit knowledge model.

FIG. 16 is a diagram illustrating a message 237 displayed in a pop-up window on the property display screen 220. The message 237 queries the user as to whether to use the inspection information to generate the text information. The user presses a YES button 238 to generate text information using the inspection information and presses a NO button 239 to generate text information without using the inspection information.

The user's determination criteria are described below.

As described above, the first tacit knowledge model 4004A and the second tacit knowledge model 4004B differ as follows: The first tacit knowledge model 4004A is capable of generating text information specific to expert knowledge and a particular item, whereas the second tacit knowledge model 4004B is capable of generating general-purpose text information applicable to expert knowledge and items of the same type (same category).

For example, when the specific item is a turbo refrigerator used by a customer, the item is owned by the customer, and thus, inspection history and operational expertise are stored for the item. The user determines that the user wants to generate accurate text information (answer) specialized for a specific item by using the information and the first tacit knowledge model 4004A.

Although no such accurate information is present for items of the same type, specifically, for refrigerators in the category of turbo refrigerators, expert knowledge about turbo refrigerators in general is present. In this case, the user may generate general-purpose text information (answer) applicable to items of the same type by using the second tacit knowledge model 4004B. Thus, the user can determine whether to use the inspection information to generate the text information according to the extent of detailed information required.

Instead of the user determining whether to use the inspection information, the selection unit 48 may determine whether to use the inspection information to generate the text information automatically (without confirming with the user) or semi-automatically (recommending to the user to request confirmation). For example, when the question sentence included in the input information, such as audio or text information, is related to the inspection information of an item, the selection unit 48 determines to use the first tacit knowledge model 4004A because appropriate text information may not be generated with the second tacit knowledge model 4004B.

The number of tacit knowledge models is not limited to two and may be three or more. The user may be able to select a desired tacit knowledge model.

FIG. 17 is a diagram illustrating text information displayed on the text display screen 230. The text display screen 230 includes the first display area 214 and the second display area 215. In FIG. 17, in response to a request for a tacit knowledge comment of the table from the user, the three-dimensional image information 223 and captured images 233 and 234 of the table are displayed. The three-dimensional image information 223 is acquired from the image management server 40. The captured images 233 and 234 are acquired from the property information management server 20. The number of the captured images 233 and 234 may be one or may be three or more, with the number of captured images stored in the property information management server 20 as an upper limit.

Text information 235 reads "Scratches under 1 mm will be repaired with paint; deeper scratches will be polished." The text information 235 is displayed in the second display area 215 in association with the three-dimensional image information 223 of the table or the captured images 233 and 234. The text information 235 is generated by the large-scale language model 4005 from the tacit knowledge comment, the inspection information, and the question sentence.

When the first tacit knowledge model 4004A detects, for example, scratches in the captured images 233 and 234 of the item, the first tacit knowledge model 4004A outputs a tacit knowledge comment related to the scratches on the item. Since the tacit knowledge comment, the question sentence related to the scratches, and the inspection information for specifying the current state of the scratches are input into the large-scale language model 4005, appropriate text information can be generated for the question related to the current scratches.

### Effect of Generating Text Information Using Inspection Information

An effect of generating text information using inspection information, as in the present embodiment, is described below.
1. Comparative Example 1 (Case of Using Typical Large-Scale Language Model)
   Question sentence: The user asks a question, "How can I repair cracks?"
   Tacit knowledge comment: You can use tape or filler.
2. Comparative Example 2 (Case of Learning Three-Dimensional Image Information)
   Learning phase
   Input image: three-dimensional image information
   Comment: Please use tape for wide cracks and filler for narrow cracks.
   Inference phase
   Input image: three-dimensional image information
   Question sentence: "How can I repair cracks?"
   Tacit knowledge comment: There are wide and narrow cracks, so it is recommended to use tape for the former and filler for the latter.
3. Present Embodiment (Three-Dimensional Image Information and Captured Image)
   Learning phase
   Input image: three-dimensional image information and a captured image
   Inspection Information: There is a crack in the tape at the corner.
   Inference phase
   Input image: three-dimensional image information and a captured image
   Question sentence: "How can I repair cracks?"
   Tacit knowledge comment: There are wide and narrow cracks, so it is recommended to use tape for the former and filler for the latter. However, please apply tape carefully to corners, as improper application may cause cracks.
   In other words, "please apply tape carefully to corners, as improper application may cause cracks" is an effect of having learned the inspection information.
4. Present Embodiment (Three-Dimensional Image Information, Captured Image, and Input Information)
   Learning phase
   Input image: three-dimensional image information and a captured image
   Comment: Please use tape for wide cracks and filler for narrow cracks.
   Inspection Information: There is a crack in the tape at the corner.
   Inference phase
   Input image: three-dimensional image information and a captured image
   Question sentence: "How can I repair cracks?"
   Tacit knowledge comment: There are wide and narrow cracks, so it is recommended to use tape for the former and filler for the latter. However, please apply tape carefully to corners, as improper application may cause cracks.

In other words, "please apply tape carefully to corners, as improper application may cause cracks" is an effect of having learned the inspection information.

### Example in which Image Management Server Acquires Inspection Information from Property Information Management Server

In FIGS. 8 and 14, the terminal device 10 acquires inspection information from the property information management server 20, whereas the image management server 40 acquires the inspection information from the terminal device 10. Alternatively, the image management server 40 may directly acquire the inspection information from the property information management server 20.

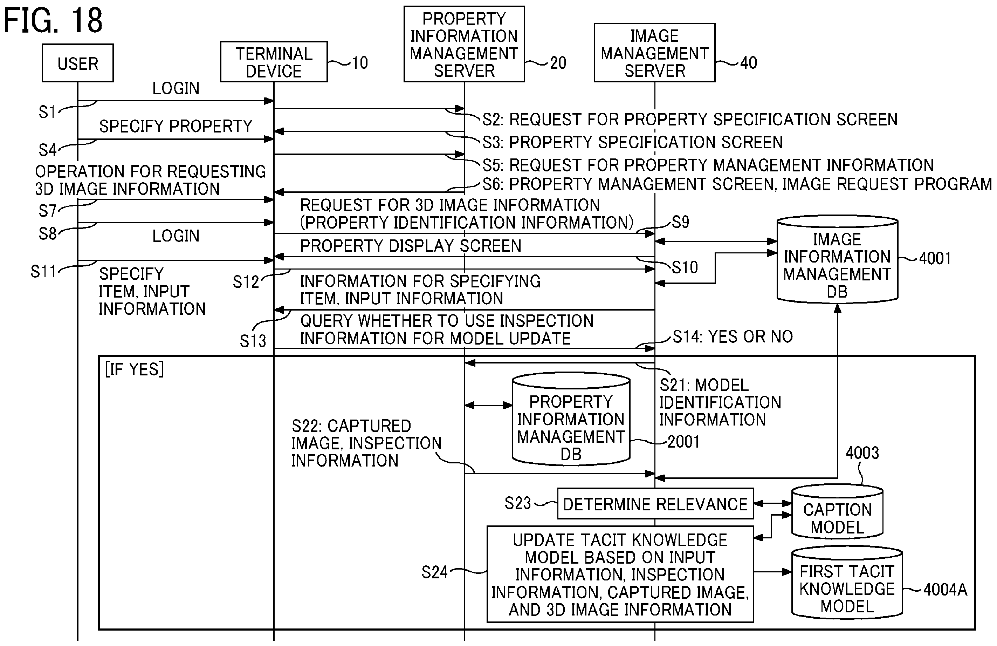

FIG. 18 is a sequence diagram illustrating a process in which the image management server 40 communicates with the property information management server 20 to update a model. Although the following description, with reference to FIG. 18, focuses on the differences from FIG. 8, the sequence diagram of FIG. 18 is also modified in the same manner. Steps S1 through S14 may be performed similarly to the corresponding steps in FIG. 8.

In step S21, the transmission/reception unit 41 of the image management server 40 receives YES or NO, indicating whether to use the inspection information (whether the inspection information is necessary). When the inspection information is necessary (YES), the storage/retrieval unit 49 specifies the model identification information of the item having the closest position information based on information for specifying the item (in this case, position information) from the image information management DB 4001. The processing unit 47 requests the transmission/reception unit 41 to request the inspection information.

The transmission/reception unit 41 calls the API of the property information management server 20 to specify the model identification information and transmit a request for the inspection information and the captured image to the property information management server 20. When the information for specifying the item is the model identification information, the search of the image information management DB 4001 is not necessary.

In step S22, the transmission/reception unit 21 of the property information management server 20 receives the request for the inspection information and the captured image. The storage/retrieval unit 29 searches the property information management DB 2001 using the model identification information and acquires the inspection information and the captured image. The transmission/reception unit 21 transmits the inspection information and the captured image to the image management server 40.

Subsequent steps S23 and S24 may be performed similarly to steps S19 and S20 in FIG. 8. The process in which the image management server 40 acquires the inspection information and the captured image from the property information management server 20 has been described above with reference to the sequence diagram of FIG. 18 at the time of updating the model as an example. However, the same applies to the time of generating the text information in FIG. 14.

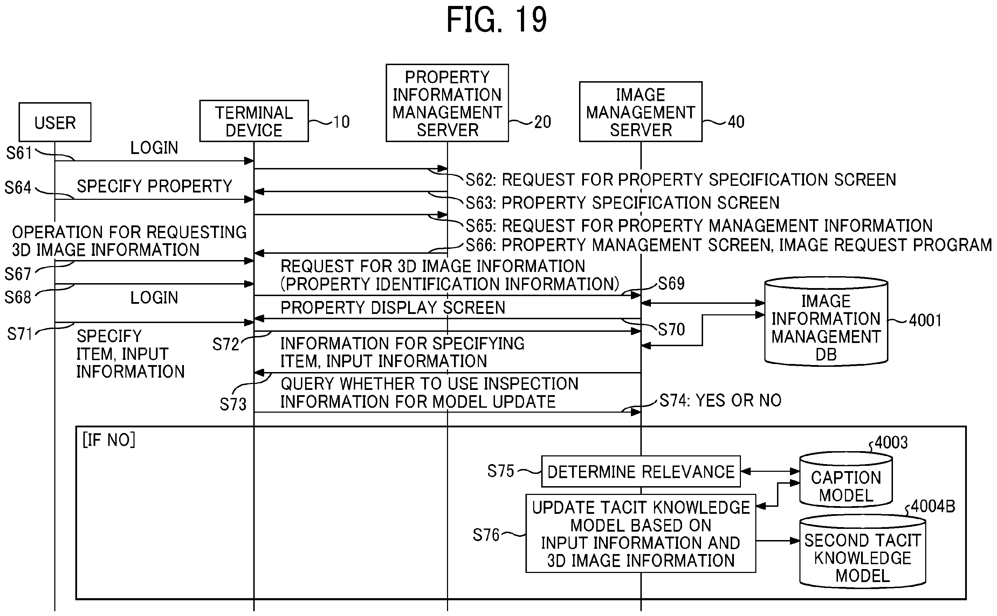

Case where Second Tacit Knowledge Model is Used for Learning or Inference
Learning Phase (Model Update)
A model update process in which the second tacit knowledge model 4004B learns data is described below with reference to FIG. 19.

FIG. 19 is a sequence diagram illustrating a model update process.

The following description, with reference to FIG. 19, focuses on the differences from FIG. 8. Steps S61 through S74 may be performed similarly to steps S1 through S14 in FIG. 8.

In step S75, the transmission/reception unit 41 of the image management server 40 receives YES or NO, and the selection unit 48 determines whether the inspection information is necessary based on the received YES or NO.

A case where the inspection information is not necessary (NO) is described below with continued reference to FIG. 19.

Since the inspection information is not necessary, the image management server 40 does not perform a process of acquiring the inspection information and the captured image from the property information management server 20. The determination process of the relevance may be performed similarly to that in FIG. 8.

In step S76, the update unit 46 updates the caption model 4003 by associating the comment determined to have a high relevance in step S75 as a caption comment with the model identification information.

The update unit 46 updates the second tacit knowledge model 4004B with learning data including the comment determined to have a low relevance in the step S75 and the three-dimensional image information of the item associated with the comment (specified in the step S72). In other words, the correspondence between the three-dimensional image information and the comment associated with the item is learned, whereas the inspection information and the captured image are not subject to learning. Features are extracted from the three-dimensional image information of the item by some feature extraction models suitable for images, such as CNN. The features represent, for example, what is shown where, or the content of work performed. Thus, the tacit knowledge model is capable of learning the correspondence between the features extracted from the three-dimensional image information of the item and the comment associated with the item.

The screens displayed by the terminal device 10 in the learning phase may be the same as those in FIGS. 10 to 13.

### Inference Phase (Generation of Text Information)

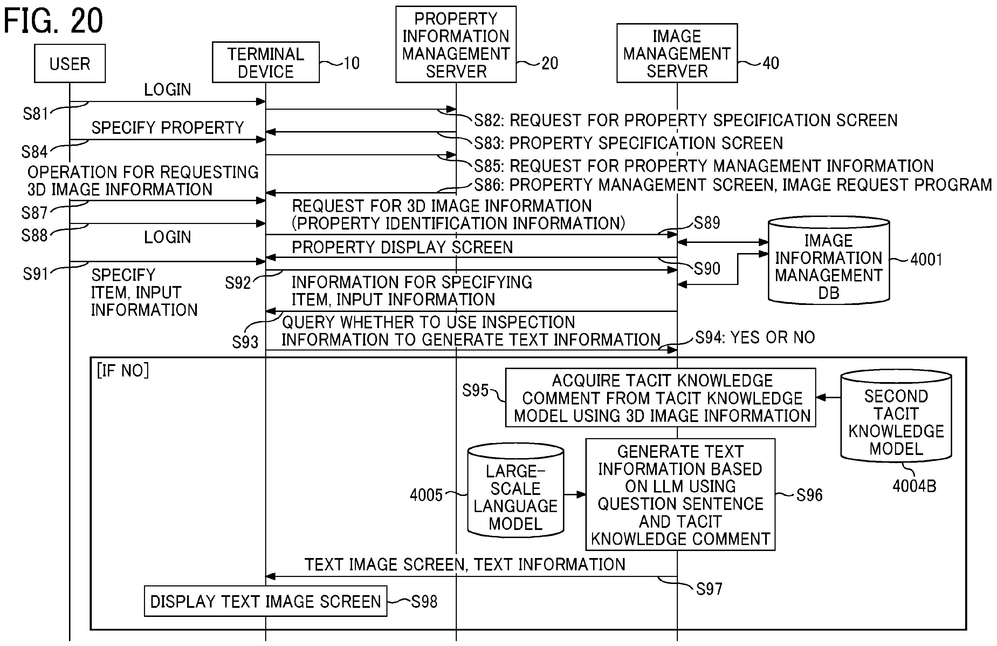

A text information generation process using the second tacit knowledge model 4004B is described below with reference to FIG. 20.

FIG. 20 is a sequence diagram illustrating a text information generation process using the second tacit knowledge model 4004B. The following description, with reference to FIG. 20, focuses on the differences from FIG. 14. Steps S81 through S94 may be performed similarly to steps S31 through S44 in FIG. 14.

In step S95, the transmission/reception unit 41 of the image management server 40 receives YES or NO, and the selection unit 48 determines whether the inspection information is necessary based on the received YES or NO.

A case where the inspection information is not necessary (NO) is described below with continued reference to FIG. 20.

Since the inspection information is not necessary, the image management server 40 does not perform a process of acquiring the inspection information and the captured image from the property information management server 20.

The processing unit 47 requests the text information generation unit 45 to generate text information. The text information generation unit 45 acquires a tacit knowledge comment corresponding to the three-dimensional image information of the item from the second tacit knowledge model 4004B. The second tacit knowledge model 4004B extracts features of the three-dimensional image information of the item to specify the comment (not including the inspection information) corresponding to the features. The tacit knowledge model extracts the comment as a tacit knowledge comment.

In step S96, the text information generation unit 45 acquires text information generated by the large-scale language model 4005 using the tacit knowledge comment and the input information (question sentence). The large-scale language model 4005 is capable of generating more detailed text information using the tacit knowledge comment and the input information (question sentence). The text information generation unit 45 may convert audio information included in the input information into text information. The text information generated by the text information generation unit 45 may be either audio information or text information.

The text information generation unit 45 may generate text information without using any question sentence.

The text information generation unit 45 may generate a fixed question in the system and use the fixed question. In this case, the question sentence is not visible to the user. Alternatively, the text information generation unit 45 may generate a fixed question in the system, cause the fixed question to be displayed on a display to prompt the user to select the fixed question, and use the selected question.

Subsequent steps S97 and S98 may be performed similarly to steps S51 and S52 in FIG. 14.

### Examples of Screens

Among the screens displayed by the terminal device 10 in the inference phase, the property specification screen 200 may be the same as that in FIG. 10, and the property management screen 210 may be the same as that in FIG. 11. The property display screen 220 is the same as that illustrated in FIGS. 15 and 16. The text information 235 on the text display screen 230 of FIG. 17 is different in the process of FIG. 20.

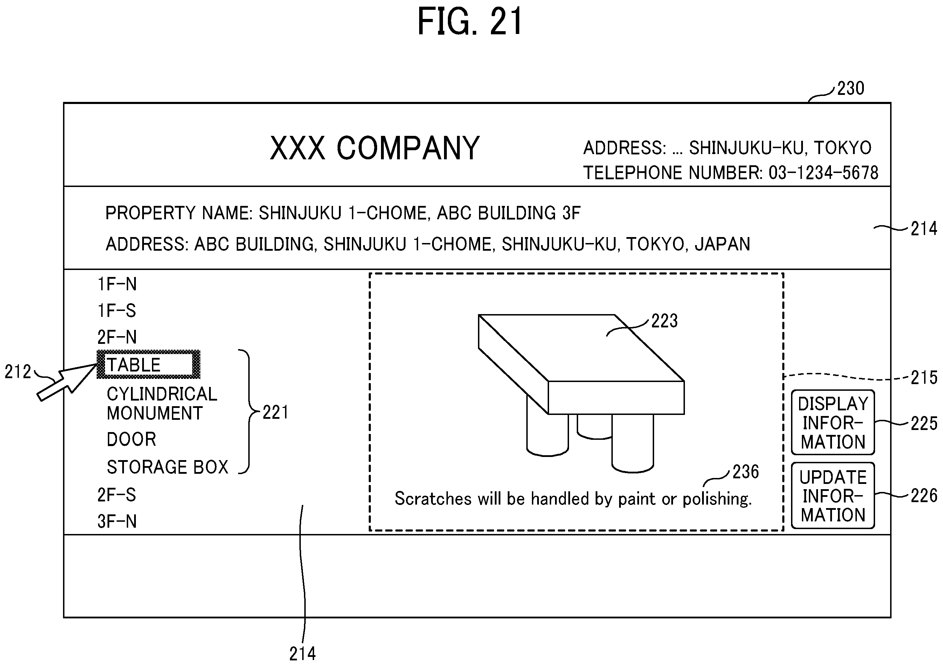

FIG. 21 is a diagram illustrating the text display screen 230 including text information generated based on the second tacit knowledge model 4004B. Text information 236 reads "Scratches will be handled by paint or polishing." The text information 236 is displayed in the second display area 215 in association with the three-dimensional image information 223 of the table. The text information 236 is generated by the large-scale language model 4005 from the tacit knowledge comment generated by the second tacit knowledge model 4004B and the input information (question sentence). Since the tacit knowledge comment does not reflect the inspection information and the captured image, even if there are scratches on the item, the scratches in the captured image are not reflected in the tacit knowledge comment. Further, the large-scale language model 4005 does not use inspection information to generate text information.

For such reasons, when the text information 236 in FIG. 21 is compared with the text information 235 in FIG. 17, the text information 236 is general text information for scratches on a table and is inferior to the text information 235 in detail. However, the text information 236 has high general applicability to scratches on a table.

### Multimodal

Several examples of combinations of input information and tacit knowledge comments are described below.

Although the above-described model is a large-scale language model, a multimodal model may be used that receives data in multiple data formats, such as images, text, and gestures, and outputs the data in a predetermined data format.

**In** a case where the input information is string data presented as a text string and the content other than the text information is generated as a tacit knowledge comment, the text string is input to generate an image, a moving image, audio, or a 3D model. **In** a case where the input information includes string data presented as a text string and non-string data, and the text information is generated as a tacit knowledge comment, an image and the text string are input to generate text information; a 3D model and the text string are input to generate text information; or audio and the text string are input to generate text information. **In** a case where the input information includes string data presented as a text string and non-string data, and the content other than the text information is generated as a tacit knowledge comment, an image and the text string are input to generate an image; a moving image and the text string are input to generate a moving image; a 3D model and the text string are input to generate a 3D model; or audio and the text string are input to generate audio.

According to the present embodiment, users can selectively use the first tacit knowledge model 4004A trained on the inspection information and the second tacit knowledge model 4004B trained without the inspection information. In other words, the image management server 40 is capable of generating detailed text information using the first tacit knowledge model 4004A for items for which inspection information is stored and is capable of generating highly versatile text information using the second tacit knowledge model 4004B for items of the same category.

### Second Embodiment

The update and inference of a tacit knowledge model in a case where the user logs in to the image management server 40 is described below.

When the user directly logs in to the image management server 40, it is unclear whether the user has the authority to log in to the property information management server 20. However, the first tacit knowledge model 4004A is updated using the inspection information. For this reason, it is not preferable to permit the use of the first tacit knowledge model 4004A when a user who does not have the authority to log in to the property information management server 20 logs in to the image management server 40. To address such an unfavorable situation, in the present embodiment, the update of the second tacit knowledge model 4004B alone and the generation of the text information are permitted when the user directly logs in to the image management server 40.

The hardware configuration described in the above embodiment with reference to FIG. 2 and the functional configuration described in the above embodiment with reference to FIG. 3 are applicable to those in the present embodiment.

### Operations or Processes

### Learning Phase (Model Update)

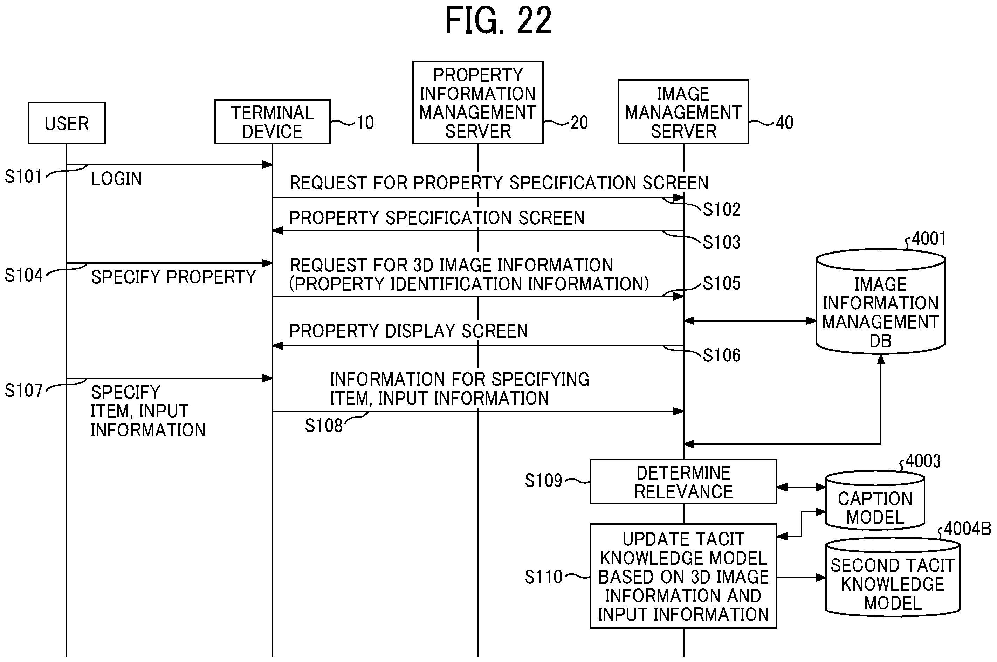

A model update process in which the second tacit knowledge model 4004B learns data is described below with reference to FIG. 22.

FIG. 22 is a sequence diagram illustrating a model update process.

In step S101, the user inputs a login operation into the terminal device 10. This login is a login to the image management server 40. The input reception unit 12 of the terminal device 10 receives the login operation. The login method may be any existing method. It is assumed that the login is successful.

In step S102, in response to the successful login, the transmission/reception unit 11 of the terminal device 10 transmits a request for the property specification screen 200 to the image management server 40.

In step S103, the transmission/reception unit 41 of the image management server 40 receives the request for the property specification screen 200.

The screen generation unit 42 generates the property specification screen 200, and the transmission/reception unit 41 transmits the screen information of the property specification screen 200 to the terminal device 10.

In step S104, the transmission/reception unit 11 of the terminal device 10 receives the screen information of the property specification screen 200. The display control unit 13 causes the property specification screen 200 to be displayed as illustrated in FIG. 10. The user inputs property identification information (for example, V0001) into the displayed property specification screen 200. The input reception unit 12 of the terminal device 10 receives the property identification information.

In step S105, the transmission/reception unit 11 of the terminal device 10 specifies the property identification information and transmits a request for three-dimensional image information of the property to the image management server 40. Since the terminal device 10 has not logged in to the property information management server 20, the property management screen 210 of FIG. 11 is not displayed.

In step S106, the transmission/reception unit 41 of the image management server 40 receives the request, and the storage/retrieval unit 49 searches the image information management DB 4001 using the property identification information. The storage/retrieval unit 49 acquires the three-dimensional image information of each item. The screen generation unit 42 generates a screen corresponding to the second display area 215 for displaying three-dimensional image information of an item. The transmission/reception unit 41 transmits the three-dimensional image information on the screen corresponding to the second display area 215 to the terminal device 10. The three-dimensional image information of each item is three-dimensional image information of an item placed in a property specified by the property identification information. Since the item is represented using the 3D model shape information, the terminal device 10 projects the three-dimensional model shape of the item onto a two-dimensional plane to generate a planar image. The user can browse an item while changing the viewpoint.

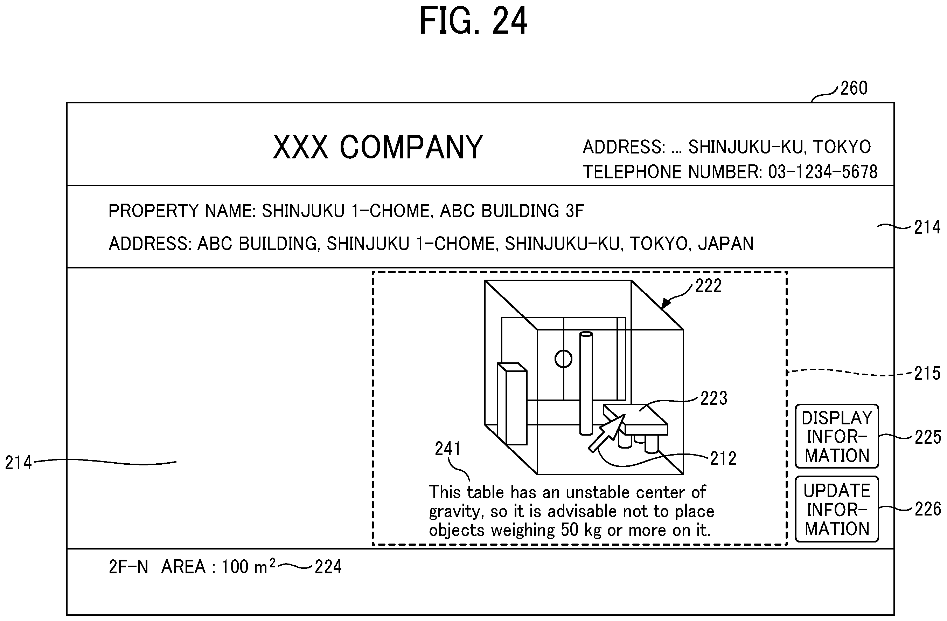

In step S107, the transmission/reception unit 11 of the terminal device 10 receives the screen information of the screen corresponding to the second display area 215, and the display control unit 13 causes a property display screen 260 including the second display area 215 to be displayed as illustrated in FIG. 24. Since the terminal device 10 has not logged in to the property information management server 20, a list of items placed in the property is not displayed. However, the screen generation unit 42 may display information equivalent to the list of items by using the image information management DB 4001 stored by the image management server 40. The user specifies an item from the three-dimensional image information of the property. When the user specifies the item, the inspection information of the item can be requested. The input reception unit 12 of the terminal device 10 receives an operation for specifying the item. The item may be specified by, for example, coordinates clicked by the user, or model identification information may be specified by the coordinates.

The user inputs a comment on the item into the terminal device 10. The comment is, for example, a comment of text information or an audio comment as described above with reference to FIGS. 6A to 7B. The comment may be referred to as input information. The comment can be a tacit knowledge comment. The comment may also include a caption comment describing an item.

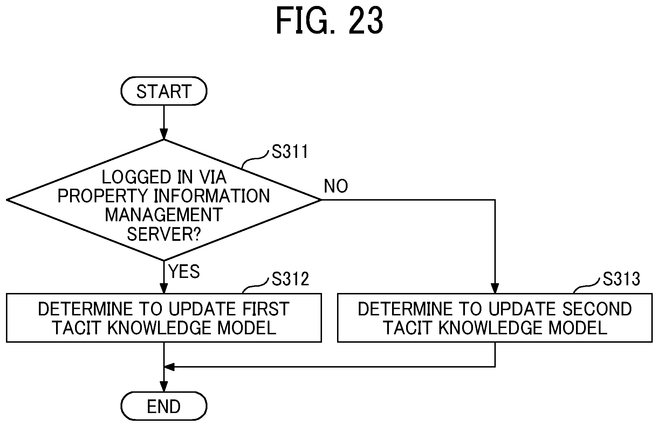

In step S108, when the user presses the information update button 226, the transmission/reception unit 11 of the terminal device 10 transmits information indicating that the information update button 226 has been pressed, information for identifying the item, and the input information to the image management server 40. The transmission/reception unit 41 of the image management server 40 receives these pieces of information. The selection unit 48 determines which of the first tacit knowledge model 4004A and the second tacit knowledge model 4004B is to be updated. Since the selection unit 48 determines that the login in step S101 is not a login using the image request program distributed from the property information management server 20-that is, the login in step S101 is a direct login to the image management server 40-the selection unit 48 determines to update the second tacit knowledge model 4004B. The determination in the step S108 is described below with reference to FIG. 23.

Subsequent steps S109 and S110 may be performed similarly to steps S75 and S76 in FIG. 19. In other words, the second tacit knowledge model 4004B is updated.

FIG. 23 is a flowchart of a process in which the selection unit 48 determines whether to update the first tacit knowledge model 4004A or to update the second tacit knowledge model 4004B. In step S311 of FIG. 23, the selection unit 48 determines whether the login to the image management server 40 has been performed via the property information management server 20. The selection unit 48 can determine whether the login to the image management server 40 has been performed via the property information management server 20, based on whether the login has been performed using the image request program distributed from the property information management server 20.

When the selection unit 48 determines that the login to the image management server 40 has been performed via the property information management server 20 (YES in step S311), in step S312, the selection unit 48 determines to update the first tacit knowledge model 4004A.

By contrast, when the selection unit 48 determines that the login to the image management server 40 has not been performed via the property information management server 20 (NO in step S311), in step S313, the selection unit 48 determines to update the second tacit knowledge model 4004B.

Although the model update has been described as an example with reference to FIG. 23, the flow can be applied to the selection of a model to be used for the generation of text information.

### Examples of Screens

The property specification screen 200 displayed by the terminal device 10 in the learning phase may be the same as that in FIG. 10.

The screen illustrated in FIG. 11 is not displayed because the property information management server 20 generates the screen.

The property display screen 260 is described below with reference to FIG. 24.

FIG. 24 is a diagram illustrating the property display screen 260. The property display screen 260 includes the second display area 215. When FIG. 24 is compared with FIG. 12, the item list 221 is not displayed on the property display screen 260 illustrated in FIG. 24. This is because the terminal device 10 has directly logged in to the image management server 40, and thus, the item list 221 stored by the property information management server 20 is not displayed.

### Inference Phase (Generation of Text Information)

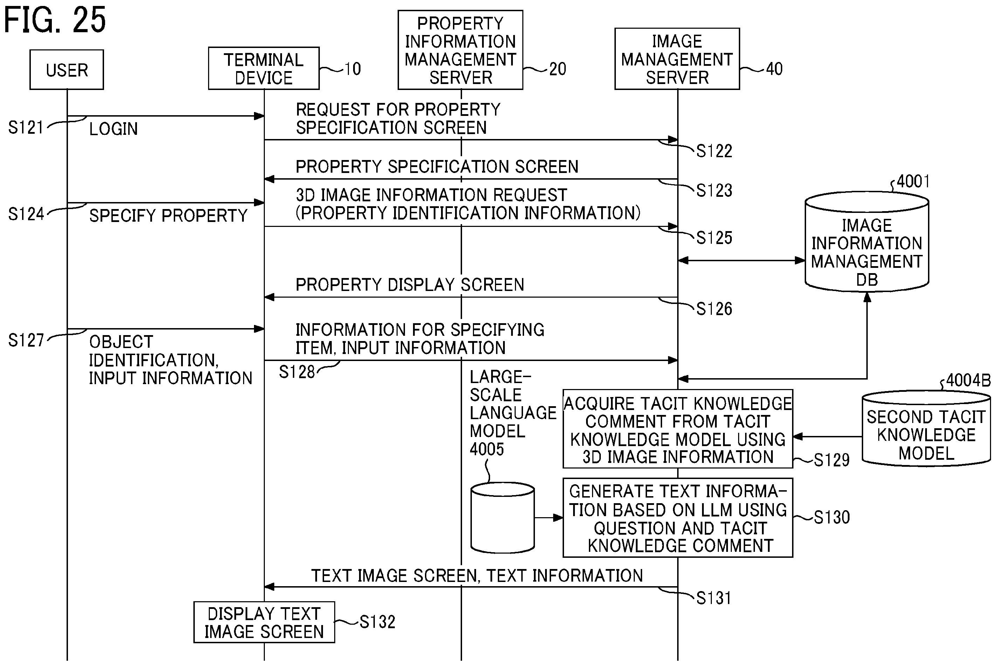

A text information generation process using the second tacit knowledge model 4004B is described below with reference to FIG. 25.

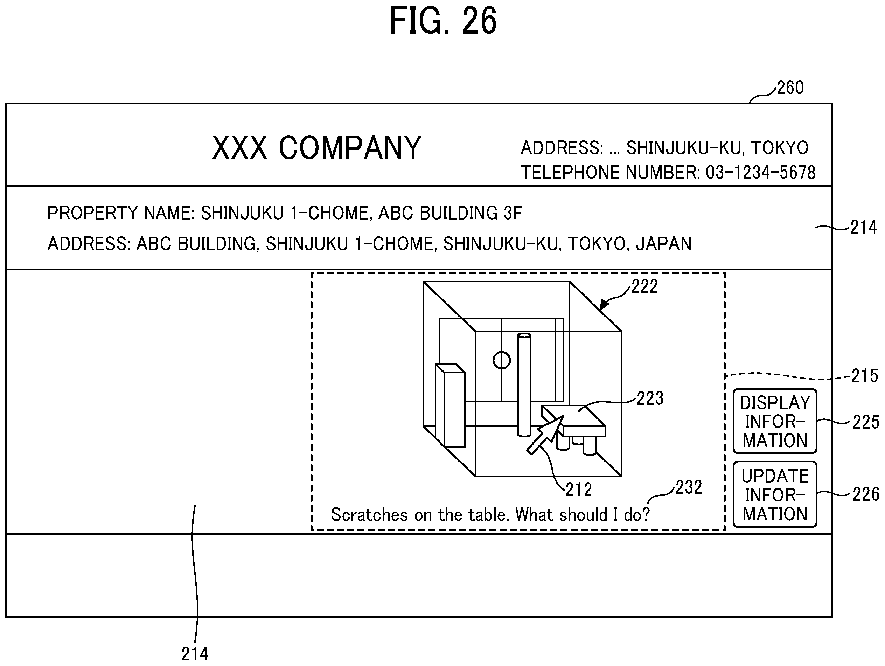

FIG. 25 is a sequence diagram illustrating a text information generation process using the second tacit knowledge model 4004B when the terminal device 10 directly logs in to the image management server 40. The following description, with reference to FIG. 25, focuses on the differences from FIG. 20. Steps S121 through S124 may be performed similarly to steps S81 through S84 in FIG. 20. Steps S125 through S128 may be performed similarly to steps S89 through S92 in FIG. 20. However, in step S127, the user inputs a question sentence related to the item as illustrated in FIG. 26.

In step S129, the transmission/reception unit 11 of the terminal device 10 transmits information indicating that the information display button 225 has been pressed, information for identifying the item, and the input information (question sentence) to the image management server 40. The transmission/reception unit 41 of the image management server 40 receives these pieces of information. The selection unit 48 determines which of the first tacit knowledge model 4004A and the second tacit knowledge model 4004B is to be updated. Since the selection unit 48 determines that the login in step 121 is not a login using the image request program distributed from the property information management server 20-that is, the login in step S121 is a direct login to the image management server 40-the selection unit 48 determines to generate text information using the second tacit knowledge model 4004B.

Subsequent steps S130 through S132 may be performed similarly to steps S96 through S98 in FIG. 20. In other words, the text information is generated using the second tacit knowledge model 4004B and the large-scale language model 4005.

### Examples of Screens

The property specification screen 200 displayed by the terminal device 10 in the inference phase may be the same as that in FIG. 10.

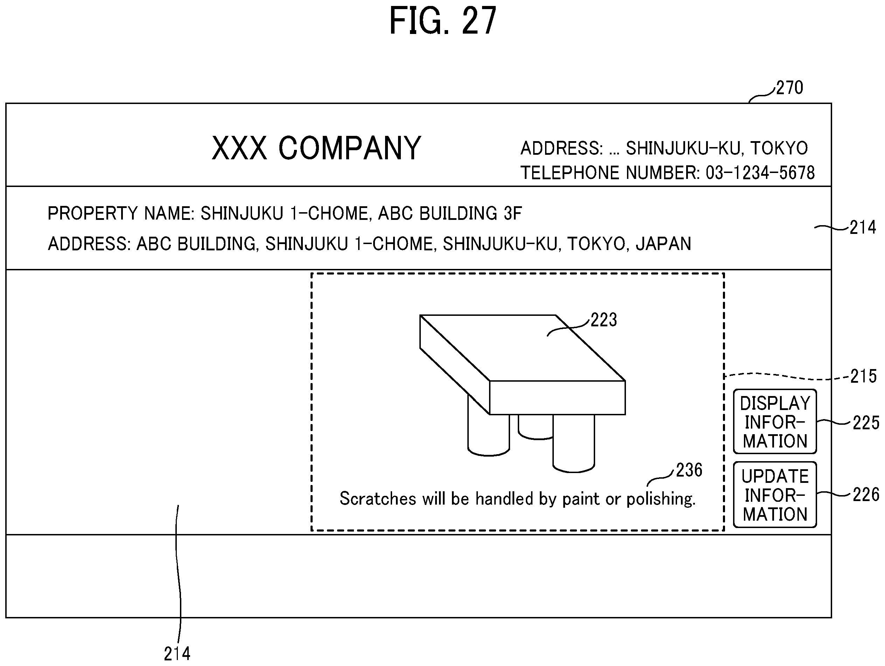

The screen illustrated in FIG. 11 is not displayed because the property information management server 20 generates the screen. The property display screen 260 in the inference phase is as illustrated in FIG. 26, whereas a text display screen 270 in the inference phase is as illustrated in FIG. 27.

FIG. 26 is a diagram illustrating the property display screen 260 when the terminal device 10 directly logs in to the image management server 40. The property display screen 260 is an example of a second display screen. When FIG. 26 is compared with FIG. 15, the item list 221 is not displayed on the property display screen 260 illustrated in FIG. 26. This is because the terminal device 10 has directly logged in to the image management server 40, and thus, the item list 221 stored by the property information management server 20 is not displayed.

FIG. 27 is a diagram illustrating the text display screen 270. When FIG. 27 is compared with FIG. 21, the item list 221 is not displayed on the text display screen 270 illustrated in FIG. 27. This is because the terminal device 10 has directly logged in to the image management server 40. Since the text information 236 is generated based on the second tacit knowledge model 4004B, the text information 236 similar to the text information 236 in FIG. 21 is displayed.

According to the present embodiment, when users directly log in to the image management server 40, the provision of text information generated using the first tacit knowledge model 4004A trained on inspection information to the users can be restricted. Even in this case, the image management server 40 can provide text information generated using the second tacit knowledge model 4004B that has not learned inspection information to the users. When users log in to the image management server 40 via the property information management server 20, the text information generated using the first tacit knowledge model 4004A trained on inspection information can be provided to the users.

### Third Embodiment

An information processing system in which two terminal devices each generate text information is described below.

### System Configuration

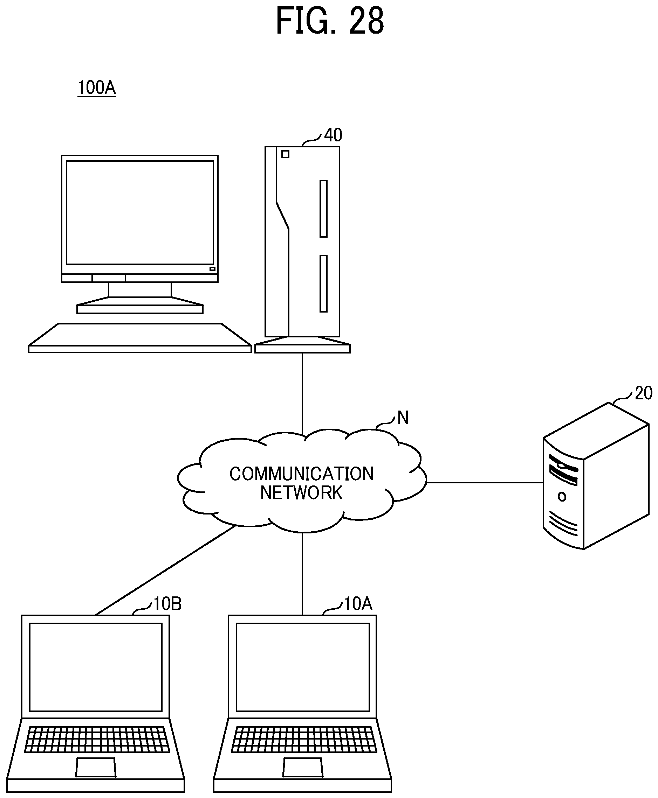

FIG. 28 is a diagram illustrating an overall configuration of an information processing system 100A. The following description, with reference to FIG. 28, focuses on the differences from FIG. 1. As illustrated in FIG. 28, the information processing system 100 includes terminal devices 10A and 10B. Any one of the terminal devices 10A and 10B may be referred to simply as "terminal device 10." Any users use the terminal devices 10A and 10B. For the sake of simplicity, the terminal device 10A logs in to the property information management server 20, whereas the terminal device 10B logs in to the image management server 40. The functions of the terminal devices 10A and 10B may be the same as the function of the terminal device 10 illustrated in FIG. 3.

The terminal device 10A, which is an example of a first terminal device, executes the processing described in the first embodiment. The terminal device 10B, which is an example of a second terminal device, executes the processing described in the second embodiment.

In other words, the terminal device 10 of the first embodiment corresponds to the terminal devices 10A and 10B. The terminal device 10A updates a model and generates text information according to the first embodiment, whereas the terminal device 10B updates a model and generates text information according to the second embodiment.

### Fourth Embodiment

The image management server 40 that generates an image from a captured image and text information is described below.

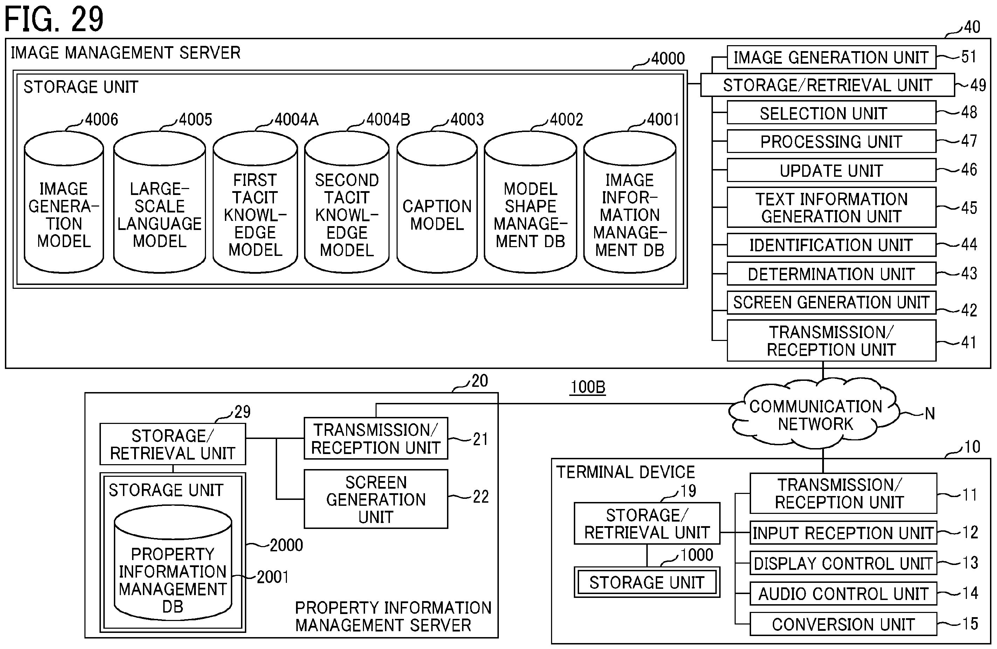

FIG. 29 is a block diagram illustrating a functional configuration of the image management server 40, the property information management server 20, and the terminal device 10 in an information processing system 100B. The following description, with reference to FIG. 21, focuses on the differences from FIG. 3.

The image management server 40 illustrated in FIG. 29 further includes an image generation unit 51. The storage unit 4000 of the image management server 40 further stores an image generation model 4006. The other configurations may be the same as those illustrated in FIG. 3.

The image generation unit 51, which is an example of an image generation unit, is implemented by instructions from the CPU 401 illustrated in FIG. 2. The image generation unit 51 inputs either text data or both text data and an image into the image generation model 4006 to generate image information.

The image generation model 4006 is a machine learning model (generative AI) that generates images from text data, or from both text data and images. The image generation model 4006 is trained using, for example, learning data including text data and images. The learning data includes, for example, either text data or both text data and an image for learning as an input or inputs, and an image as a correct answer to an output. For example, learning may be performed so that an image generated by the image generation model 4006, into which either the text data or both the text data and an image included in the learning data are input, gets closer to the image as the correct answer included in the learning data.

### Learning Phase

The processing in the learning phase may be the same as that in FIG. 18. In step S24, the update unit 46 updates the first tacit knowledge model 4004A to learn a correspondence between inputs and an output, where the inputs include the comment determined to have a low relevance in the step S23 and the inspection information, and the output includes the three-dimensional image information or the captured image of the item. Alternatively, the update unit 46 updates the first tacit knowledge model 4004A to learn a correspondence between inputs and an output, where the inputs include the comment, the inspection information, and the three-dimensional image information (or the captured image) of the item, and the output includes the captured image (or the three-dimensional image information).

### Inference Phase (Generation of Text Information)

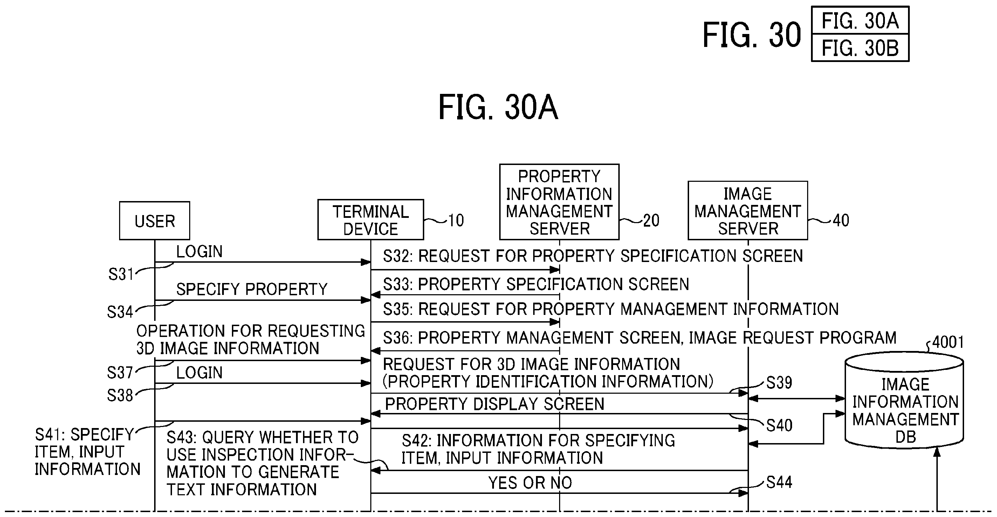

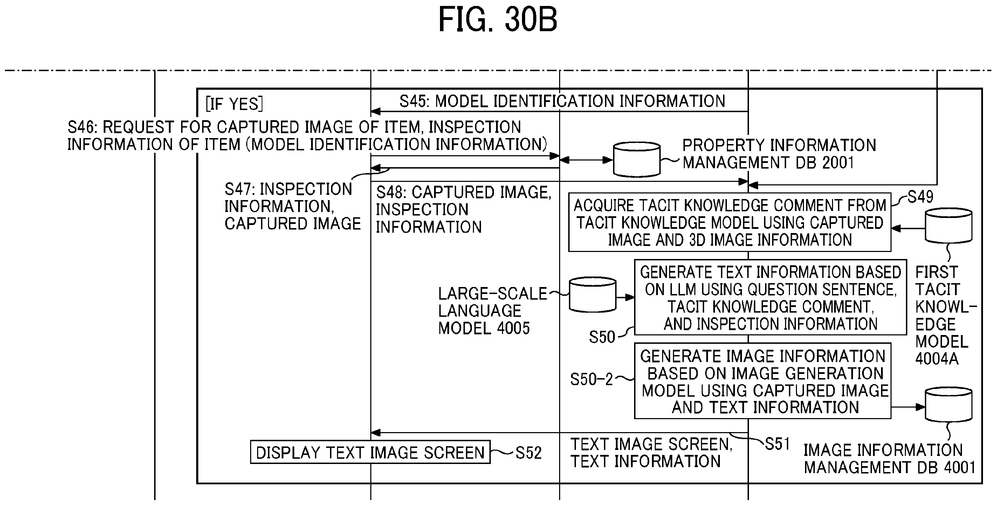

FIGS. 30A and 30B (FIG. 30) are a sequence diagram illustrating a process of generating text information and image information. The following description, with reference to FIGS. 30A and 30B (FIG. 30), focuses on the differences from FIG. 14. In FIG. 30B (FIG. 30), step S50-2 is added.

In step S50-2, the image generation unit 51 inputs the captured image and the text information generated by the large-scale language model 4005 into the image generation model 4006 to generate image information. The image generation unit 51 may acquire the image information generated by the image generation model 4006 using the text information generated by the large-scale language model 4005, without using the captured image.

The storage/retrieval unit 49 stores (or overwrites) the text information generated by the large-scale language model 4005 and the image information generated by the image generation model 4006 in the image information management DB 4001 in association with the captured image and the inspection information stored in the image information management DB 4001 in step S48.

In step S51, the processing unit 47 associates the three-dimensional image information of the item corresponding to the model identification information, the generated image information, and the text information with one another, and requests the screen generation unit 42 to display these pieces of information. The screen generation unit 42 generates a screen corresponding to the second display area 215 for displaying the three-dimensional image information of the item, the generated image information, and the text information. The transmission/reception unit 41 of the image management server 40 transmits the generated text information to the terminal device 10 together with the screen information of the screen corresponding to the second display area 215. The transmission/reception unit 11 of the terminal device 10 receives the screen information of the screen corresponding to the second display area 215 and the text information transmitted from the image management server 40.

### Example of Inference Phase screen

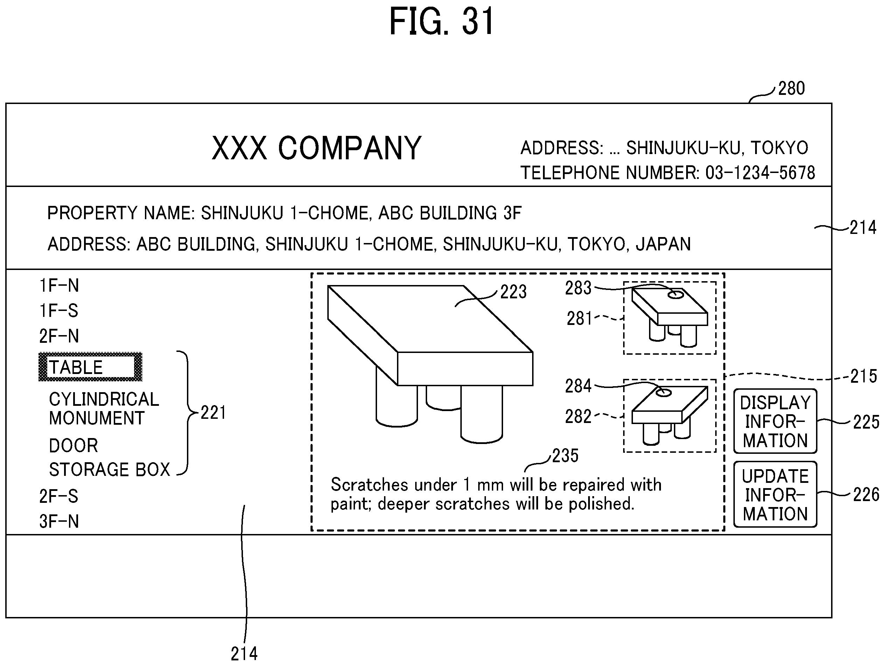

FIG. 31 is a diagram illustrating generated image information displayed on a text display screen 280. The following description, with reference to FIG. 31, focuses on the differences from FIG. 17.

Generated images 281 and 282 are displayed on the text display screen 280 in FIG. 31. The generated images 281 and 282 are not the captured images 233 and 234 themselves described above with reference to FIG. 17. The generated images 281 and 282 are generated by the image generation model 4006 based on the captured images 233 and 234 and the text information 235. The generated images 281 and 282 have markers 283 and 284, each indicating the position of a scratch.

As described above, the image management server 40 is capable of selectively using the first tacit knowledge model 4004A or the second tacit knowledge model 4004B according to the login path, regardless of whether the terminal device 10A logs in via the property information management server 20 or the terminal device 10B logs in directly to the image management server 40. Even when the terminal devices 10A and 10B log in to the image management server 40 in parallel (at the same time), the first tacit knowledge model 4004A or the second tacit knowledge model 4004B can be used properly.

### Other Application Examples

The present disclosure is not limited to the above-described embodiments specifically disclosed, and various modifications and changes can be made without departing from the scope of the claims. The image management server 40 described above is merely one example, and various system configurations may be employed depending on the intended application or purpose.

Although examples in which the tacit knowledge models of the industry, such as civil engineering or construction, answer questions have been described, the tacit knowledge models may be used in any industry in which tacit knowledge is effective, such as medical care, dental care, and investment determination.

Although examples in which the large-scale language model 4005 generates text information based on tacit knowledge comments have been described, the tacit knowledge comments may be used as text information without using the large-scale language model 4005.

The first tacit knowledge model 4004A may be trained on tacit knowledge comments using three-dimensional image information and inspection information as inputs and using input information as an output. In other words, information in different forms, such as an image and text, may be input.

The image management server 40 may generate two pieces of text information using both the first tacit knowledge model 4004A and the second tacit knowledge model 4004B, instead of using either the first tacit knowledge model 4004A or the second tacit knowledge model 4004B.

In other words, the image management server 40 may generate text information using at least one of the first tacit knowledge model 4004A and the second tacit knowledge model 4004B.

Although the information processing systems 100, 100A, and 100B in a client-server configuration have been described, the function of the image management server 40 may be installed as an application in the terminal device 10. In other words, users may be able to use the functions of the above embodiments in a stand-alone manner.

In the configuration illustrated in, for example, FIG. 3, the processing by the image management server 40 is divided according to the main functions to facilitate understanding. The present disclosure is not limited by how the processing is divided or by the names of the processing units. The processing performed by the image management server 40 may be further divided into a greater number of processing units depending on the nature of the processing. In addition, a single processing unit may be further subdivided to include a greater number of processing operations.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a CD-ROM, a magnetic tape device, or a solid state memory device.

The apparatuses or devices described in one or more embodiments represent only one of multiple computing environments that may be used to implement the one or more embodiments disclosed herein. In one embodiment, the image management server 40 includes multiple computing devices, such as a server cluster. The multiple computing devices are configured to communicate with one another via any type of communication link, including networks or shared memory, and perform the processing disclosed herein.

Further, the image management server 40 may combine the disclosed processing steps in various ways. Each component of the image management server 40 may be integrated into a single device or distributed across multiple devices. In addition, the processing performed by the image management server 40 may alternatively be carried out by the terminal device 10.

The present disclosure includes the following aspects.

According to a first aspect, an information processing system includes an image management server that manages three-dimensional image information of an item, and a terminal device capable of communicating with the image management server. The image management server includes a first model, a second model, and a text information generation unit. The first model is trained on a correspondence among the three-dimensional image information of the item, a two-dimensional image of the item, and information on the item; or a correspondence among the three-dimensional image information of the item, the two-dimensional image of the item, the information on the item, and input information input into the terminal device. The second model is trained on a correspondence between the three-dimensional image information of the item and the input information input into the terminal device. The text information generation unit generates text information on the item based on the three-dimensional image information of the item selected via the terminal device, the two-dimensional image of the item, the information on the item, and the first model, or generates the text information on the item based on the three-dimensional image information of the item selected via the terminal device and the second model. The terminal device includes a display control unit that causes a display screen including the text information to be displayed.

According to a second aspect, in the information processing system of the first aspect, the text information generation unit generates the text information based on the three-dimensional image information of the item selected via the terminal device, the two-dimensional image of the item, the information on the item, the input information received by an input reception unit of the terminal device, and the first model, or generates the text information based on the three-dimensional image information of the item selected via the terminal device, the input information received by the input reception unit of the terminal device, and the second model.

According to a third aspect, the information processing system of the first aspect further includes a property information management server that is capable of communicating with the terminal device and the image management server and that manages the information on the item. The text information generation unit generates the text information based on the three-dimensional image information of the item, the information on the item transmitted by the property information management server, the two-dimensional image of the item transmitted by the property information management server, and the first model.

According to a fourth aspect, in the information processing system of any one of the first to third aspects, the image management server includes a determination unit that determines whether to generate the text information on the item based on the three-dimensional image information of the item selected via the terminal device, the two-dimensional image of the item, the information on the item, and the first model, or to generate the text information on the item based on the three-dimensional image information of the item selected via the terminal device and the second model.

According to a fifth aspect, in the information processing system of the fourth aspect, the determination unit determines whether to use the first model or to use the second model based on selection of whether to use the information on the item received by the terminal device or on the input information in the form of audio or text received by an input reception unit of the terminal device.

According to a sixth aspect, in the information processing system of any one of the first to fifth aspects, the image management server includes an update unit that causes the first model to learn the correspondence among the three-dimensional image information of the item, the two-dimensional image of the item, and the information on the item to update the first model, or causes the second model to learn the correspondence between the three-dimensional image information of the item and the input information input into the terminal device without using the information on the item to update the second model.

According to a seventh aspect, in the information processing system of the fourth or fifth aspect, the determination unit determines whether to cause the first model to learn the correspondence among the three-dimensional image information of the item, the two-dimensional image of the item, and the information on the item to update the first model, or to cause the second model to learn the correspondence between the three-dimensional image information of the item and the input information input into the terminal device without using the information on the item to update the second model.

According to an eighth aspect, in the information processing system of the third aspect, the display control unit causes the input information to be displayed on a first display screen including the information on the item and the two-dimensional image of the item, each being acquired from the property information management server, and the three-dimensional image information of the item acquired from the image management server on one screen, or causes the input information to be displayed on a second display screen including the three-dimensional image information of the item acquired from the image management server without including the information on the item.

The text information generation unit generates the text information based on the input information, the three-dimensional image information of the item, the two-dimensional image of the item, and the information on the item, each being displayed on the first display screen, and the first model, or generates the text information based on the input information and the three-dimensional image information of the item, each being displayed on the second display screen, and the second model.

According to a ninth aspect, in the information processing system of the eighth aspect, the text information generation unit generates the text information based on the input information, the three-dimensional image information of the item, the two-dimensional image of the item, and the information on the item, each being displayed on the first display screen, and the first model, or generates the text information based on the input information, the three-dimensional image information of the item, and the two-dimensional image of the item, each being displayed on the first display screen, and the second model.

According to a tenth aspect, in the information processing system of the eighth or ninth aspect, the image management server further includes an update unit that causes the first model to learn a correspondence among the three-dimensional image information of the item, the two-dimensional image of the item, the input information, and the information on the item, each being displayed on the first display screen, to update the first model, or causes the second model to learn a correspondence between the three-dimensional image information of the item and the input information, each being displayed on the second display screen, to update the second model.

According to an eleventh aspect, in the information processing system of the tenth aspect, the update unit causes the first model to learn the correspondence among the three-dimensional image information of the item, the two-dimensional image of the item, the input information, and the information on the item, each being displayed on the first display screen, to update the first model, or causes the second model to learn a correspondence among the three-dimensional image information of the item, the two-dimensional image of the item, and the input information, each being displayed on the first display screen, to update the second model.

According to a twelfth aspect, the information processing system of the third aspect further includes a first terminal device and a second terminal device, each being capable of communicating with the image management server. The first terminal device includes a first display control unit that causes a first display screen to be displayed. The first display screen includes the three-dimensional image information of the item acquired from the image management server, and the information on the item and the two-dimensional image of the item, each being acquired from the property information management server. The second terminal device includes a second display control unit that causes a second display screen to be displayed. The second display screen includes the three-dimensional image information of the item acquired from the image management server. The text information generation unit generates the text information on the item based on the three-dimensional image information of the item selected via the first terminal device, the two-dimensional image of the item, the information on the item, and the first model, and generates the text information on the item based on the three-dimensional image information of the item selected via the second terminal device and the second model.

According to a thirteenth aspect, in the information processing system of any one of the first to twelfth aspects, the three-dimensional image information of the item represents a projection of a three-dimensional model shape of the item onto a two-dimensional plane and is displayable from multiple viewpoints.

According to a fourteenth aspect, in the information processing system of any one of the first to thirteenth aspects, the information on the item includes information input by a user inspecting a state of the item.

## Claims

1. An information processing system (100) comprising:
an image management server (40) configured to manage image information of an item; and
a terminal device (10) configured to communicate with the image management server (40),
the image management server (40) including:
a memory (4000) that stores a first model (4004A) and a second model (4004B),
the first model (4004A) trained on:
a correspondence between the image information of the item and information on the item; or
a correspondence among the image information of the item, the information on the item, and input information input into the terminal device (10),
the second model (4004B) trained on a correspondence between the image information of the item and the input information input into the terminal device (10); and
a text information generation unit (45) configured to generate text information on the item based on:
the image information of the item selected via the terminal device (10), the information on the item, and the first model (4004A); or
the image information of the item selected via the terminal device (10) and the second model (4004B),
the terminal device (10) including a display control unit (13) configured to cause a display screen including the text information to be displayed.

2. The information processing system (100) according to claim 1, wherein:
the terminal device (10) further includes an input reception unit (12); and
the text information generation unit (45) is configured to generate the text information based on:
the image information of the item selected via the terminal device (10), the information on the item, the input information received by the input reception unit (12), and the first model (4004A); or
the image information of the item selected via the terminal device (10), the input information received by the input reception unit (12), and the second model (4004B).

3. The information processing system (100) according to claim 1, further comprising a property information management server (20) configured to communicate with the terminal device (10) and the image management server (40) and manage the information on the item,
wherein the text information generation unit (45) is configured to generate the text information based on the image information of the item, the information on the item transmitted by the property information management server (20), and the first model (4004A).

4. The information processing system (100) according to any one of claims 1 to 3, wherein the image management server (40) further includes a determination unit (48) configured to determine whether to generate the text information on the item based on:
the image information of the item selected via the terminal device (10), the information on the item, and the first model (4004A); or
the image information of the item selected via the terminal device (10) and the second model (4004B).

5. The information processing system (100) according to claim 4, wherein:
the terminal device (10) further includes an input reception unit (12); and
the determination unit (48) is configured to determine whether to use the first model (4004A) or to use the second model (4004B) based on:
selection of whether to use the information on the item received by the terminal device (10); or
the input information in a form of audio or text received by the input reception unit (12).

6. The information processing system (100) according to any one of claims 1 to 5, wherein the image management server (40) further includes an update unit (46) configured to:
cause the first model (4004A) to learn the correspondence between the image information of the item and the information on the item to update the first model (4004A); or
cause the second model (4004B) to learn the correspondence between the image information of the item and the input information input into the terminal device (10) without using the information on the item to update the second model (4004B).

7. The information processing system (100) according to claim 4 or 5, wherein the determination unit (48) is configured to determine whether to:
cause the first model (4004A) to learn the correspondence between the image information of the item and the information on the item to update the first model (4004A); or
cause the second model (4004B) to learn the correspondence between the image information of the item and the input information input into the terminal device (10) without using the information on the item to update the second model (4004B).

8. The information processing system (100) according to claim 3, wherein:
the display control unit (13) is configured to cause the input information to be displayed on:
a first display screen including the information on the item acquired from the property information management server (20) and the image information of the item acquired from the image management server (40) on one screen; or
a second display screen including the image information of the item acquired from the image management server (40) without including the information on the item; and
the text information generation unit (45) is configured to generate the text information based on:
the input information, the image information of the item, and the information on the item, each being displayed on the first display screen, and the first model (4004A); or
the input information and the image information of the item, each being displayed on the second display screen, and the second model (4004B).

9. The information processing system (100) according to claim 8, wherein the text information generation unit (45) is configured to generate the text information based on:
the input information, the image information of the item, and the information on the item, each being displayed on the first display screen, and the first model (4004A); or
the input information and the image information of the item, each being displayed on the first display screen, and the second model (4004B).

10. The information processing system (100) according to claim 8 or 9, wherein the image management server (40) further includes an update unit (46) configured to:
cause the first model (4004A) to learn a correspondence among the image information of the item, the input information, and the information on the item, each being displayed on the first display screen, to update the first model (4004A); or
cause the second model (4004B) to learn a correspondence between the image information of the item and the input information, each being displayed on the second display screen, to update the second model (4004B).

11. The information processing system (100) according to claim 10, wherein the update unit (46) is configured to:
cause the first model (4004A) to learn the correspondence among the image information of the item, the input information, and the information on the item, each being displayed on the first display screen, to update the first model (4004A); or
cause the second model (4004B) to learn the correspondence between the image information of the item and the input information, each being displayed on the first display screen, to update the second model (4004B).

12. The information processing system (100) according to claim 3, further comprising a first terminal device (10A) and a second terminal device (10B) configured to communicate with the image management server (40), the first terminal device (10A) and the second terminal device (10B) including the terminal device (10), wherein:
the first terminal device (10A) includes a first display control unit (13) configured to cause a first display screen, including the image information of the item acquired from the image management server (40) and the information on the item acquired from the property information management server (20), to be displayed;
the second terminal device (10B) includes a second display control unit (13) configured to cause a second display, screen including the image information of the item acquired from the image management server (40), to be displayed; and
the text information generation unit (45) is configured to:
generate the text information on the item based on the image information of the item selected via the first terminal device (10A), the information on the item, and the first model (4004A); and
generate the text information on the item based on the image information of the item selected via the second terminal device (10B) and the second model (4004B).

13. The information processing system (100) according to any one of claims 1 to 12, wherein the information on the item includes information input by a user inspecting a state of the item.

14. An image management server (40) comprising:
a memory (4000) that stores a first model (4004A) and a second model (4004B),
the first model (4004A) trained on:
a correspondence between image information of an item and information on the item; or
a correspondence among the image information of the item, the information on the item, and input information input into a terminal device that communicates with the image management server (40),
the second model (4004B) trained on a correspondence between the image information of the item and the input information input into the terminal device;
a text information generation unit (45) configured to generate text information on the item based on:
the image information of the item selected via the terminal device, the information on the item, and the first model (4004A); or
the image information of the item selected via the terminal device and the second model (4004B); and
a transmission unit (41) configured to transmit a display screen including the text information to the terminal device to cause the display screen to be displayed on the terminal device.

15. A carrier medium carrying computer-readable code for controlling a computer system to carry out a method, the method comprising:
generating (S50) text information on an item based on:
image information of the item selected via a terminal device, information on the item, and a first model trained on a correspondence between the image information of the item and the information on the item, or a correspondence between the image information of the item, the information on the item, and input information input into the terminal device; or
the image information of the item selected via the terminal device and a second model trained on a correspondence between the image information of the item and the input information input into the terminal device; and
transmitting (S51) a display screen including the text information to the terminal device to cause the display screen to be displayed on the terminal device.
